(19) Europäisches Patentamt
European Patent Office
Office européen des brevets

(11) EP 1 282 663 B2

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**16.03.2011 Patentblatt 2011/11**

(45) Hinweis auf die Patenterteilung:
**17.08.2005 Patentblatt 2005/33**

(21) Anmeldenummer: **01945096.4**

(22) Anmeldetag: **08.05.2001**

(51) Int Cl.:
***C08L 3/12*** *(2006.01)* ***C08J 3/075*** *(2006.01)*
***C08L 3/02*** *(2006.01)* ***B01J 13/00*** *(2006.01)*

(86) Internationale Anmeldenummer:
**PCT/EP2001/005209**

(87) Internationale Veröffentlichungsnummer:
**WO 2001/085836 (15.11.2001 Gazette 2001/46)**

(54) **Gel aus einem Poly-a-1,4-Glucan und Stärke**

Gel comprised of a poly-a-1,4-glucan and starch

Gel constitué d'un poly-a-1,4-glucane et d'amidon

(84) Benannte Vertragsstaaten:
**AT BE CH CY DE DK ES FI FR GB GR IE IT LI LU MC NL PT SE TR**

(30) Priorität: **08.05.2000 DE 10022095**

(43) Veröffentlichungstag der Anmeldung:
**12.02.2003 Patentblatt 2003/07**

(73) Patentinhaber: **Südzucker Aktiengesellschaft Mannheim/Ochsenfurt**
**68165 Mannheim (DE)**

(72) Erfinder:
- **BENGS, Holger**
**60598 Frankfurt am Main (DE)**
- **TOMKA, Ivan**
**CH-8057 Zürich (CH)**
- **MÜLLER, Rolf**
**CH-8055 Zürich (CH)**

(74) Vertreter: **Gleiss & Grosse**
**Patentanwälte Rechtsanwälte**
**Leitzstrasse 45**
**70469 Stuttgart (DE)**

(56) Entgegenhaltungen:
**DE-A- 2 653 244** **DE-A- 19 729 273**
**US-A- 3 128 209** **US-A- 3 265 632**
**US-A- 3 336 429**

- **PATENT ABSTRACTS OF JAPAN vol. 13, no. 224 (C-599), 24. Mai 1989 (1989-05-24) & JP 01 037262 A (NIPPON SHOKUHIN KAKO LTD) & DATABASE WPI Week 198911 Derwent Publications Ltd., London, GB; AN 1989-082885**

EP 1 282 663 B2

## Beschreibung

Die vorliegende Erfindung betrifft ein Gel auf Basis eines Poly-$\alpha$-1,4-Glucans und Stärke sowie ein Verfahren zur Herstellung eines derartigen Gels und dessen Verwendung.

Als Gele werden elastische Mikrophasen im gequollenen Zustand bezeichnet. Hierbei wird die elastische Mikrophase durch Perkolation von Strukturelementen aufgebaut, die molekulare oder supermolekulare Dimensionen haben können und ein räumliches Netzwerk bilden.

Die Gelbildung kann durch einen Spinodalen- oder einen Wachstumprozess erfolgen. Im zweiten Fall ist der Perkolation ein Verzweigungsprozess vorgelagert.

In Gelen kann mechanische Energie gespeichert werden.

Wird diese mechanische Energie durch Scherschwingung eingebracht , so kann die Antwortfunktion des Gels mit dem frequenzabhängigen komplexen Schubmodul beschrieben werden. Der reale Anteil dieses Moduls - der Speichermodul - beschreibt dabei die mechanischen Eigenschaften des Netzwerks, der imaginäre Anteil das viskose Fliessen und somit die Dissipation der eingebrachten Energie in die Phase des Quellungsmediums.

Im Gleichgewicht ist der Quellungszustand - die Quellung des Gels - vorteilhaft durch die Volumenfraktion des Netzwerks gegeben.

Nach Flory & Barrett in Disc. Farad. Soc. 57, 1 (1974) werden vier Typen von Gelen unterschieden:

1. geordnete lamellare Strukturen aus Mesophasen oder silikatischen Phasen;

2. ungeordnete kovalente makromolekulare Netzwerke mit verzweigten und linearen Polymeren;

3. makromolekulare Netzwerke mit geordneten Vernetzungsstellen und diese verknüpfende ungeordnete Bereiche; und

4. ungeordnete Strukturen aus stark anisotropen Partikeln, Flokkulaten und Koazervaten.

Bekannt sind Gele aus Gelatine, Kieselsäure, Montmorrilonit, Bentoniten, Polysacchariden, Pektinen u.a. als Geliermittel und einer Flüssigkeit, üblicherweise Wasser, als Dispersions- beziehungsweise Quellmittel.

Davon wird insbesondere Gelatine zum Beispiel in der Nahrungsmittel- und Getränkeindustrie zur Herstellung von u.a. Sülzen, Geleespeisen, Puddings, Speiseeis und Joghurts beziehungsweise zur Klärung von Weinen und Fruchtsäften; in der Pharmazie und Medizin zur Herstellung von harten und weichen Kapseln, von Suppositorien, als Bindemittel für Tabletten, Stabilisator für Emulsionen und Blutplasma-Extender; in der Kosmetik als Bestandteil von Salben, Pasten und Cremes; zur Mikroverkapselung von Farbstofflösungen für moderne Durchschreibpapiere verwendet.

Gelatine ist ein Polypeptid, das vornehmlich durch Hydrolyse des in der Haut und Knochen von Tieren enthaltenen Kollagens gewonnen wird.

Im Verlauf der Problematik um die übertragbare spongiforme Enzephalopathien (Creutzfeld-Jakob-Disease, bovine spongioforme Enzephalopathie, Scrapie) sowie aufgrund der Diskussion um vegetarische Alternativen zu gelatinehaltigen Gelen bzw. Darreichungsformen die den "koscher-" oder "hlal" - Anforderungen genügen, entsteht ein Bedarf an alternativen Produkten, die ohne Verwendung von tierischen Proteinen hergestellt werden können, bzw. die aus Rohstoffen bestehen, welche nicht auf tierischen Quellen beruhen.

Aus der Literatur sind zahlreiche Beispiele bekannt, wie Gele und Netzwerke auf der Basis von Kohlehydraten aufgebaut werden können. So beschreiben Yamada, Watei & Wakao in der JP030986038 ein Verfahren zur Herstellung von Kapseln bestehend aus einer Mischung von Cellulose und Stärke für die Anwendung in Lebensmitteln und pharmazeutischen Applikationen.

In der Druckschrift WO92/09274 wird der teilweise Austausch von Gelatine bei der Kapselherstellung durch Amylose-angereicherte Stärke vorgeschlagen.

In der US-Anmeldung 5,342,626 wird die Herstellung von Filmen aus Carrageen, Gellanen und Mannanen beschrieben. Die Herstellungskosten dieser Gele und Netzwerke sowie deren nachteilige mechanische Eigenschaften stehen derzeit einer breiten Anwendung im Wege.

Weiterhin ist es im Fachgebiet gut bekannt, das Stärken und Mischungen aus Stärken mit weiteren Komponenten für die Herstellung von thermoplastischen Werkstoffen genutzt werden können. Diese sind beispielsweise in EP 397819, EP 542155, WO 99/02660, WO 99/02595, WO 99/02040 offengelegt. Im Gegensatz zu thermoplastischen Materialien, welche bei Temperaturerhöhung übergangslos in die Schmelze übergehen, weisen die hier beschriebenen Gele bei Temperaturerhöhung zwischen Glasübergangstemperatur und Schmelztemperatur einen breiten Temperaturbereich mit gummielatischem Verhalten auf. In diesem Bereich sind die Gele nicht fließfähig. Das Schubmodul-Temperatur-Verhalten weist in diesem gummielastischen Bereich bei Gelen einen stufenförmigen Verlauf auf, was bei Thermoplasten nicht der Fall ist.

Native Stärke besteht u.a. aus Amylose und Amylopektin, wobei sowohl native Amylose als auch entzweigte Stärke einen Verzweigungsgrad aufweist, der im Gegensatz zum Lehrbuchwissen > 0 ist (s. dazu: Hizukuri, S.; Carbohydrate Research, 94 (1981), 205 - 213; Praznik, W.; Starch/Stärke, 46 (1994), 3, 88-94; Cheng-Yi, L.; Proc. Natl. Sci. Counc. Vool. 11, No. 4, 1987, 341 - 345).

Angesichts dieses Stands der Technik war es daher Aufgabe der vorliegenden Erfindung, eine Alternative zu Gelatine auf pflanzlicher Basis zur Verfügung zu stellen.

Darüber hinaus sollen erfindungsgemäße Gele eine gute Verarbeitung in "State of the art high throughput" Maschinen aufweisen sowie ausreichende mechanische Eigenschaften für die Weiterverarbeitung zu Filmen, Kapseln, Folie, Monofilament oder Faser sowie zu retardierenden Freisetzungssystemen.

Gelöst wird diese sowie weitere, nicht explizit genannte Aufgaben, die jedoch aus den hierin einleitend diskutierten Zusammenhängen ohne weiteres ableitbar oder erschließbar sind, durch den Gegenstand von Patentanspruch 1. Zweckmäßige Abwandlungen des erfindungsgemäßen Verfahrens werden in den auf Anspruch 1 rückbezogenen Unteransprüchen unter Schutz gestellt.

Ein Gegenstand der vorliegenden Erfindung ist daher ein Geliermittel auf Basis von Poly-$\alpha$-1,4-Glucan und Stärke, das bei Zusatz eines Quellungsmittels beziehungsweise eines geeigneten Lösungsmittels ein Gel ausbilden kann.

Weiter betrifft die vorliegende Erfindung ein Gel auf Basis von Poly-$\alpha$-1,4-Glucan und Stärke, dessen Herstellung und Verwendung.

Überraschenderweise wurde von den vorstehend benannten Erfindern gefunden, daß, ausgehend von einer Mischung aus wasserunlöslichem linearen Poly-$\alpha$-1,4-Glucan mit hohem kristallinen Anteil mit gegebenenfalls Stärke und einem Quellungsmittel die Herstellung von hochstabilen und leicht verarbeitbaren und handhabbaren Gelen/Netzwerken, möglich ist.

Die erfindungsgemäßen Gele aus Poly-$\alpha$-1,4-Glucan und gegebenenfalls Stärke sind in Struktur und Aufbau den Gelatine/Wasser-Gelen und Poly(vinylchlorid)/Weichmacher-Gelen ähnlich. wie sie von I. Tomka in "Stand der Forschung an der photographischen Gelatine" Chimia, 30, 534, 1976 und von K. Te Nijenhuis (Dissertation, Delft, 1979) beschrieben worden sind.

In diesen 3 Systemen verknüpfen geordnete Vernetzungsstellen ungeordnete Bereiche (siehe Typ 3 Gel nach Flory, supra.).

Die Vernetzungsstellen in den erfindungsgemäßen Gelen entstehen durch Kristallisation von Poly-$\alpha$-1,4-Glucan, gegebenenfalls in Cokristallisation mit einem Anteil an Stärkemolekülen wobei die nicht kristallisierte Stärke die ungeordneten Bereiche bildet.

Poly-$\alpha$-1,4-Glucane sind lineare Polysaccharide, bestehend aus Glucosemonomeren, wobei letztere das Polymerrückgrat durch Ausbildung von $\alpha$-1,4-glycosidischèn Bindungen aufbauen. Das häufigste natürlich vorkommende Poly-$\alpha$-1,4-Glucan ist die Amylose, die zusammen mit dem stärker verzweigten Amylopektin die Grundsubstanz pflanzlicher Stärke darstellt.

Poly-$\alpha$-1,4-Glucan (nachstehend auch als Polyglucan oder PG bezeichnet) wie Stärke haben als großen Vorteil gemeinsam, dass sie nichttoxisch und biologisch abbaubar sind. Aufgrund dieser vorteilhaften Eigenschaften eignen sie sich prinzipiell für die Anwendung im Lebensmittelbereich sowie in Pharmazie und Medizin.

Nicht erfindungsgemäß weisen die linearen Polyglucane einen Verzweigungsgrad von $\leq 10^{-3}$ beziehungsweise von $\leq 10^{-4}$ oder von $10^{-6}$ auf.

Unter Verzweigungsgrad wird dabei das Verhältnis der Anzahl Mole der 1,4,6-$\alpha$-D-Glucan-Einheiten zu der Anzahl der Mole der 1,4-$\alpha$-D-Glucan-Einheiten verstanden

Für die Erfindung sind Polyglucane geeignet, die keine Verzweigungen aufweisen, beziehungsweise deren Verzweigungsgrad so minimal ist, dass er nicht nachweisbar ist.

Für die vorliegende Erfindung bezieht sich das Präfix "alpha" allein auf die Verknüpfungen, die das Polymerrückgrat ausbilden und nicht auf die Verzweigungen.

Das erfindungsgemäß bevorzugt eingesetzte lineare Polyglucan ist wasserunlöslich, wobei erfindungsgemäß unter dem Begriff "wasserunlösliches Polyglucan" Verbindungen verstanden werden, die nach der Definition des Deutschen Arzneimittelbuches (DAB = Deutsches Arzneimittelbuch, Wissenschaftliche Verlagsgesellschaft mbH, Stuttgart, Govi-Verlag, Frankfurt, Auflage, 1987) entsprechend den Klassen 5 bis 7 unter die Kategorien "schwer lösliche", "sehr schwer lösliche" beziehungsweise "praktisch unlösliche" Verbindungen fallen.

Im Fall der erfindungsgemäß bevorzugt verwendeten Polyglucane bedeutet dies, daß mindestens 99,5 % unter Normalbedingungen (T = 25 °C +/- 20 %, p= 101325 Pascal +/- 20 %) in Wasser unlöslich ist (entsprechend der Klasse 5).

Für die vorliegende Erfindung sind schwer lösliche bis praktisch unlösliche Verbindungen, insbesondere sehr schwer lösliche bis praktisch unlösliche Verbindungen besonders bevorzugt.

"Sehr schwer löslich" entsprechend Klasse 6 kann durch folgende Versuchsbeschreibung veranschaulicht werden:

Ein Gramm des zu untersuchenden Polyglucans wird in 1 l entionisierten Wasser auf 130° C unter einem Druck von 1 bar erhitzt. Die entstehende Lösung bleibt nur kurzzeitig über wenige Minuten stabil. Beim Erkalten unter Normalbedingungen fällt die Substanz wieder aus. Nach Abkühlung auf Raumtemperatur und Abtrennung mittels Zentrifugation können unter Berücksichtigung der experimentellen Verluste mindestens 66 % der eingesetzten Menge zurückgewonnen werden.

Das erfindungsgemäß bevorzugt einsetzbare lineare Polyglucan besitzt weiterhin eine Molekulargewichtsverteilung bzw. Polydispersität (definiert als das Verhältnis von Gewichts- und Zahlenmittel der Molmasse $M_w/M_n$), die je nach Herstellungsverfahren des Polyglucans variiert. Bevorzugte Werte sind von 1,01 bis 50, insbesondere von 1,01 bis 15.

Ganz besonders bevorzugt sind für die Zwecke der vorliegenden Erfindung Polyglucane mit kleiner Polydispersität von 1,01 bis 5. Mehr bevorzugt sind Polyglucane mit einer Polydispersität von 1,01 bis 2,5. Am bevorzugtesten sind Polyglukane mit einer Polydispersität von 1,01 bis 2.

Die erfindungsgemäß eingesetzten Polyglucane können beliebigen Ursprungs sein, solange die vorstehend angegebenen Bedingungen in bezug auf die Begriffe "linear" und vorzugsweise auch "wasserunlöslich" sowie "Polydispersität), erfüllt sind.

Sie können natürlich oder auf biotechnischen Wege gewonnen sein.

Beispielsweise können sie aus natürlichen pflanzlichen oder tierischen Quellen durch Isolierung und/oder Aufreinigung erhalten werden.

Es können auch Quellen zum Einsatz kommen, die gentechnisch derart manipuliert worden sind, dass sie im Vergleich zu der unmanipulierten Quelle einen höheren Anteil an nicht oder vergleichsweise geringfügig verzweigten Polyglucanen enthalten.

Sie können durch enzymatische oder chemische Entzweigung aus nicht-linearen Polyglucanen hergestellt worden sein.

Biotechnische Methoden umfassen biokatalytische, auch biotransformatorische, oder fermentative Prozesse.

Es können auch modifizierte Polyglucane eingesetzt werden, wobei die Polyglucane beispielsweise durch Veresterung und/oder Veretherung in einer oder mehreren nicht an der linearen Verknüpfung beteiligten Positionen chemisch modifiziert worden sein können. Im Fall der bevorzugten 1,4 verknüpften Polyglucane kann die Modifizierung in 2-, 3- und/oder 6-Position erfolgen.

Modifikation im Sinne der Erfindung bedeutet, daß die vorhandenen Hydroxylgruppen, die nicht an der Verknüpfung beteiligt sind, chemisch verändert werden. Dies schließt zum Beispiel eine Ringöffnung der Glucaneinheiten aus wie sie bei der oxidativen Carboxylierung oder der Hydrolyse erfolgt. Maßnahmen für derartige Modifizierungen sind dem Fachmann hinlänglich bekannt.

Erfindungsgemäß bevorzugt wird Poly-$\alpha$-1,4-Glucan eingesetzt wie es beispielsweise gemäß dem in der WO 95/31553 beschriebenen Verfahren hergestellt beziehungsweise isoliert werden kann.

Die dort beschriebene Herstellung erfolgt enzymatisch mit einem Protein mit der Wirksamkeit von Amylosucrase.

Weitere für die Herstellung von Poly-$\alpha$-1,4-Glucan geeignete Proteine sind Phosphorylasen, Glycogensynthasen, Glucantransferasen und Stärkesynthasen.

Die Herstellung kann über in vivo Methoden mittels gegebenenfalls genetisch geänderten Lebewesen wie Bakterien, Pilzen oder Algen oder höherer Pflanzen, welche die vorstehend genannten Proteine enthalten, erfolgen.

Vorzugsweise weist das erfindungsgemäß eingesetzte Polyglucan einen Polymerisationsgrad von mindestens 30, insbesondere in einem Bereich von 40 bis 300, und besonders bevorzugt von 50 bis 100, auf.

Ein Polyglucan mit diesem Polymerisationsgrad wie es beispielsweise auch gemäß dem vorstehenden Verfahren nach der WO 95/31553 erhalten werden kann, besitzt eine bemerkenswerte Tendenz zur Bildung einer regulären Konformation. Es handelt sich um eine Doppelhelix-Molekularmorphologie mit hohem kristallinen Anteil, der mittels nuklear-magnetischer Resonanzspektroskopie (NMR) und Röntgendiffraktion nachgewiesen werden kann.

Aufgrund der gemachten Beobachtungen wurden folgende Schlussfolgerungen gezogen:
Die Änderung der Kristallstruktur infolge thermischer Umwandlung ist analog derjenigen in Kartoffelstärke, wobei die Kinetik der Umformung jedoch schneller als diejenige in Kartoffelstärke ist.

Die Bildung von molekularen Komplexen mit geeigneten niedermolekularen Mischkomponenten, wie Fettsäuren, ist gekoppelt mit der partiellen Konformationsumwandlung zur Monohelikal-V-Struktur wie sie für Amylose bekannt ist. Partiell erfolgt darüber hinaus die Bildung einer sekundär unidentifizierten und daher nicht bekannten Struktur. Die Fähigkeit zur Komplexbildung ist ungefähr dreimal höher als diejenige der Amylose.

Diese erfindungsgemäß bevorzugt eingesetzten Polyglucane kombinieren die Fähigkeit der zwei Stärkekomponenten Amylose und Amylopektin in der Art, daß die, die beiden Komponenten kennzeichnenden reguläre Konformationscharakteristiken wahlweise ausgebildet werden können.

Mit anderen Worten kombinieren die erfindungsgemäß bevorzugt eingesetzten Polyglucane in vorteilhafter Art und Weise die gute Verarbeitbarkeit von abgebauter Stärke und die erwünschten Eigenschaften von kristalliner Stärke.

Sie zeigen eine ausgeprägte Neigung zur Kristallisation und eine hohe Kristallinität.

Der Stärkebestandteil des erfindungsgemäßen Gels kann eine beliebige Stärke oder eine Mischung aus zwei oder mehreren davon, eine oder mehrere ihrer Derivate oder Mischungen von Stärke und Stärkederivaten sein.

Geeignete Stärkebeispiele sind Stärke aus Kartoffeln, Tapioka, Maniok, Reis, Weizen oder Mais. Weitere Beispiele sind Stärken aus Maranta, Batata, Roggen, Gerste, Hirse, Hafer, Sorghum, Stärken aus Früchten wie Kastanien, Eicheln, Bohnen, Erbsen u.a. Hülsenfrüchten, Bananen, sowie Pflanzenmark zum Beispiel der Sagopalme.

Mit anderen Worten kann das Verhältnis von Amylose und Amylopektin in diesen Stärken sowohl ≤0,5 als auch ≥0,5sein.

Die Stärke kann hydrothermal und/oder mechanisch vorbehandelt sein.

Neben Stärken pflanzlichen Ursprungs können auch Stärken verwendet werden, die chemisch modifiziert sind, fermentativ gewonnen wurden, rekombinanten Ursprungs sind oder durch Biotransformation beziehungsweise Biokatalyse hergestellt wurden.

Unter "chemisch modifizierten Stärken" versteht die Erfindung solche Stärken, bei denen auf chemischem Wege die Eigenschaften im Vergleich zu den natürlichen Eigenschaften verändert wurden. Dies wird im wesentlichen durch polymeranaloge Umsetzungen erreicht, bei denen Stärke mit mono-, bi- oder polyfunktionellen Reagenzien beziehungsweise Oxidationsmitteln behandelt wird. Dabei werden vorzugsweise die Hydroxygruppen der Polyglucane der Stärke durch Veretherung, Veresterung oder selektive Oxidation umgewandelt oder die Modifizierung beruht auf einer radikalisch initiierten Pfropfcopolymerisation von copolymerisierbaren ungesättigten Monomeren auf das Stärkerückgrat.

Zu besonderen chemisch modifizierten Stärken gehören unter anderem Stärkeester, wie Xanthogenate, Acetate, Phosphate, Sulfate, Nitrate, Stärkeether, wie zum Beispiel nichtionische, anionische oder kationische Stärkeether, oxidierte Stärken, wie etwa Dialdehydstärke, Carboxystärke, Persulfat-abgebaute Stärken und ähnliche Substanzen.

Bevorzugte chemische Modifikationen umfassen die Hydroxypropylierung, Acetylierung und Ethylierung.

"Fermentative Stärken" sind im Sprachgebrauch der Erfindung Stärken, die durch fermentative Prozesse unter Verwendung in der Natur vorkommender Organismen, wie Pilzen, Algen oder Bakterien gewonnen werden oder unter Einschaltung und Mithilfe von fermentativen Prozessen gewonnen werden können. Beispiele für Stärken aus fermentativen Prozessen umfassen neben anderen Gum Arabicum und verwandte Polysaccharide (Gellan Gum, Gum Ghatti, Gum Karaya, Gum Tragacauth), Xanthan, Emulsan, Rhamsan, Wellan, Schizophyllan, Polygalacturonate, Laminarin, Amylose, Amylopektin und Pektine.

"Stärken rekombinanten Ursprungs" oder "rekombinante Stärken" meint im einzelnen Stärken, die durch fermentative Prozesse unter Verwendung in der Natur nicht vorkommender Organismen, aber unter Zuhilfenahme von gentechnischen Methoden modifizierten natürlichen Organismen, wie Pilzen, Algen oder Bakterien gewonnen werden oder unter Einschaltung und Mithilfe von fermentativen Prozessen gewonnen werden können. Beispiele für Stärken aus fermentativen, gentechnisch modifizierten Prozessen sind neben anderen Amylose, Amylopektin und weitere Polyglucane.

"Durch Biotransformation hergestellte Stärken" bedeutet im Rahmen der Erfindung, dass Stärken, Amylose, Amylopektin oder Polyglucane durch katalytische Reaktion von monomeren Grundbausteinen, im allgemeinen oligomeren Sacchariden, insbesondere Mono- und Disacchariden, hergestellt werden, indem ein Biokatalysator (auch: Enzym) unter speziellen Bedingungen verwendet wird. Beispiele für Stärken aus biokatalytischen Prozessen sind neben anderen Polyglucan und modifizierte Polyglucane, Polyfructan und modifizierte Polyfructane.

Erfindungsgemäß bedeuten die Begriffe "Derivate von Stärken" oder "Stärkederivate" ganz allgemein modifizierte Stärken, das heißt solche Stärken, bei denen zur Veränderung ihrer Eigenschaften das natürliche Amylose/Amylopektin-Verhältnis verändert wurde, eine Vorverkleisterung durchgeführt wurde, die einem partiellen hydrolytischen Abbau unterzogen wurden oder die chemisch derivatisiert wurden.

Zu besonderen Derivaten von Stärken gehören unter anderem oxidierte Stärken, zum Beispiel Dialdehydstärke oder sonstige Oxidationsprodukte mit Carboxylfunktionen, oder native ionische Stärken (zum Beispiel mit Phosphatgruppen) oder ionisch weiter modifizierte Stärken, wobei sowohl anionische als auch kationische Modifizierungen unter diesen Begriff fallen.

Neben den als Gelierungsmittel dienenden Bestandteilen enthält das erfindungsgemäße Gel einen Weichmacher oder Lösungsmittel, wobei auch hier Mischungen eingesetzt werden können, als Quellungsmittel.

Beispiele für geeignete Quellungsmittel sind Wasser, Polyalkohole wie Ethylenglykol, Glycerin, Propandiol, Erythritol, Mannitol, Sorbitol, mehrwertige Alkansäuren wie Maleinsäure, Bernsteinsäure, Adipinsäure, mehrwertige Hydroxyalkansäuren wie Milchsäure, 2-Hydroxybuttersäure, Citronensäure, Apfelsäure, Dimethylsulfoxid, Harnstoff oder weitere Lösungsmittel für Stärke.

Vorzugsweise beträgt das Verhältnis des Gewichtanteils an Polyglucan zu Stärke in dem Gel beziehungsweise dem zugrundeliegenden Geliermittel 0,01 bis 1, insbesondere 0,01 dbis 0,60 und besonders bevorzugt 0,01 bis 0,50, ganz besonders bevorzugt 0,01 bis 0,40 und am meisten bevorzugt 0,01 bis 0,30.

Der Verhältnis des Gewichtanteils an Polyglucan und Stärke zu Quellungsmittel liegt im allgemeinen im Bereich von 0,01 bis 0,6.

Je nach konkret eingesetzten Komponenten oder besonderen Anwendungsfall können diese Werte auch nach oben oder unten variieren.

Der Gewichtsanteil an Polyglucan sollte jedoch nicht zu niedrig sein, da andernfalls die Dehnbarkeit beziehungsweise Festigkeit des erhaltenen Gels beeinträchtigt werden kann.

Es versteht sich, dass das erfindungsgemäße Gel neben den genannten wesentlichen Komponenten noch weiter Zusätze wie sie für den jeweiligen Anwendungsfall üblich sind, enthalten kann.

Mit der Erfindung wird ein gummielastisches Gel bereitgestellt, dass essbar, in natürlicher Umgebung biologisch abbaubar und kompostierbar ist.

Prinzipiell kann das erfindungsgemäße Gel als Ersatz für Gelatine in den vorstehend genannten Anwendungsgebieten wirken.

Eine besondere Anwendung ist die Herstellung von Kapseln oder für retardierende Freisetzungssysteme zum Beispiel für die Medizin.

Die Gele können für Anwendungen im Lebensmittel- oder Getränkebereich, in der Medizin oder Pharmakologie, in der Agrochemie oder Kosmetik eingesetzt werden. Hierfür können sie mit den erforderlichen Wirkstoffen und/oder Zusätzen versehen sein.

Für diese Anwendungen können sie bei Bedarf in eine entsprechende Form wie Faser, Folie, Film, Monofilament, Tablette, Kapsel oder dergleichen gebracht werden.

Ein weiteres Anwendungsgebiet ist die Herstellung von retardierenden Freisetzungssystemen, den sogenannten controlled release Systemen.

Es zeigen:

| | |
|---|---|
| **Figur 1** | schematisch den Aufbau eines erfindungsgemäßen Gels, |
| **Figur 2.1, 3.1** | den Einfluss des PG/Stärke-Netzwerks auf die Festigkeit, |
| **Figur 2.2, 3.2** | den Einfluss des PG/Stärke-Netzwerks auf den E-Modul E, |
| **Figur 2.3, 3.3** | den Einfluss des PG/Stärke-Netzwerks auf die Bruchdehnung, |
| **Figur 4.1** | den Einfluss der Konzentration c der Lösung auf die Festigkeit des PG/Stärke-Netzwerks, |
| **Figur 4.2** | den Einfluss der Konzentration c der Lösung auf den E-Modul E des PG/Stärke-Netzwerks, |
| **Figur 4.3** | den Einfluss der Konzentration c der Lösung auf die Bruchdehnung des PG/Stärke-Netzwerks, und |
| **Figur 5** | den Einfluss der Dichte des PG/Stärke-Netzwerks auf das Volumenquellverhältnis in synthetischen Magensaft. |

Hierbei bilden Polyglucankristallite gegebenenfalls zusammen mit einem cokristallisierten Stärkeanteil Vernetzungsstellen (1) im Gelnetzwerk und der nicht kristallisierte Stärkeanteil Verknüpfungen (2) zwischen den Kristalliten beziehungsweise Vernetzungsstellen (1). Bezugszeichen (3) bezeichnet im Netzwerk eingelagertes Quellungsmittel (Weichmacher).

Die durch die nicht kristallinen Stärkemakromoleküle verknüpften Kristallite bilden die sogenannte Mikrophase, das elastisch aktive Netzwerk.

Die Bildung des elastisch aktiven Netzwerks, welches sich über die gesamte Probendimension erstreckt, ist durch die Stöchiometrie der Anzahl und Funktionalität der Vernetzungsstellen geregelt.

Die Theorie der Netzwerkbildung wird wie folgt angenommen:

Im Verlaufe des Gelbildungsprozesses perkolieren die Kristallite durch den teilweisen Einbau von cokristallisierten Stärkemolekülen. Das Erreichen der Perkolation kann durch den kritischen Grad der Verzweigung Ac (mit Ac = kritischer Wert von A) angegeben werden, wobei A der Anteil der Funktionalitäten der Vernetzungsstellen ist, die im Verlauf der Gelbildung reagiert haben. Die Anzahl Elemente, die in einem Netzwerkpunkt verknüpft werden können, wird als Funktionalität f bezeichnet.

Es besteht die Beziehung Ac = 1 / (f-1).

Ist die Funktionalität 2 wird die Perkolation Ac = 1 nur bei vollständigen Umsatz aller Funktionalitäten erreicht.

In den hier beschriebenen Gelen ist die Funktionalität durch die Anzahl cokristallisierter Stärkemoleküle pro Kristallit (n) und durch die Anzahl Kristallite pro Stärkemolekül (x) gegeben:

$$f = (x-1)(n-1) + 1$$

Weil hier erwartungsgemäß x größer 1 und n größer 1 ist, folgt, dass f >> 1.

Der reale Anteil des Schubmoduls (G) in Scherschwingungsversuchen kann mit der Funktionalität f und der Volumenkonzentration der elastisch aktiven Netzwerkelemente (Ne/V) in Verbindung gebracht werden:

$$G = ((fn - 2) / fn)RTNe / V$$

mit

R = Gaskonstante
T = Temperatur in °K
fn = Anzahlmittel der Funktionalität.

Da fn >> 1 ist gilt: G = RT Ne/V.

Das Modul des gequollenen Netzwerkes (Gq) kann aus dem Quellfaktor (Vq/Vo) ermittelt werden:

$$Gq = Go\ Vo/Vq$$

mit Go = Modul des ungequollenen Netzwerks.

Im Gegensatz zu Gelatine-Gelen sind die erfindungsgemäßen Polyglucan/Stärke-Gele nicht thermoreversibel, dies bedeutet, dass sich die Kristallite nicht allein durch Erhöhung der Temperatur lösen. Um sie zu lösen, wird ein geeignetes Lösungsmittel wie zum Beispiel KOH oder Dimethylsulfoxid (DMSO) benötigt.

Die Netzwerkdichte und damit auch die mechanischen Eigenschaften wie Modul, Dehnung und Spannung beim Bruch kann durch Quellung oder Schrumpfung beeinflusst werden.

Als Quellungsmittel können die vorstehend genannten eingesetzt werden, wobei Weichmacher wie Wasser und/oder Glycerin bevorzugt sind. Als Schrumpfungsmittel können Ethanol, Methanol oder Aceton eingesetzt werden.

Bei der glasigen Erstarrungstemperatur (Tg) frieren die kooperativen Segmentbewegungen der Makromoleküle und folglich ihre Konformationsänderungen im Gel ein und die Gele werden spröd, verlieren ihre Gummielastizität.

Da die glasige Erstarrungstemperatur stark vom Quellfaktor und auch von der Art des Quellungsmediums abhängig ist, kann keine allgemeingültige Beziehung für Tg aufgestellt werden.

Den größten Einfluss auf die Netzwerkdichte und damit auf die mechanischen Eigenschaften der Gele - bei vergleichbarem Quellungsgrad - hat der relative Anteil an PG in der Stärke.
Diese Beziehung ist in den nachstehenden Beispielen verdeutlicht.

Ganz allgemein kann die Herstellung der erfindungsgemäßen Gele durch Fällung von Polyglucan (PG) - gegebenenfalls unter Vorliegen von Stärke - in einem geeigneten Lösungsmittel erfolgen, wobei sich durch Cokristallisation von PG und gegebenenfalls Stärke Kristallisationsgele ausbilden.
Wie die Kristallite von PG - untersucht durch Röntgen-Weitwinkel-Streuung an polykristallinen Proben - weisen die Gele ebenfalls Kristallite vom nativen Katoffelstärke-Typ auf.

Die Gelbildung in diesem Systemen kann zum Beispiel durch Absenken der Lösungsmittelkonzentration und/ oder der Temperatur ausgelöst werden.

Die hierbei erhaltenen elastisch/gummielastischen Phasen sind stabil im Temperaturbereich zwischen der glasigen Erstarrungstemperatur der Stärke und der Schmelztemperatur der PG/Stärke-Kristallite.

Es wurde beobachtet, dass die Schub- beziehungsweise Dehnmodule der erhaltenen Gele mit der Anzahl Kristallite im Gel korreliert sind, so dass ihre Dehnbarkeit beziehungsweise Festigkeit deshalb durch den Anteil an PG eingestellt werden kann.

Beispielsweise kann die Herstellung durch Kofällung einer ersten Lösung aus in einem oder mehreren Weichmachern gelöster Stärke und einer zweiten Lösung mit gelöstem Polyglucan erfolgen.
Hierzu kann Polyglucan zum Beispiel in einer starken Lauge zum Beispiel Kalilauge der Molarität 0,01 bis 3,0 gelöst werden.

Die Lösungen werden vermischt und die Fällung durch Neutralisation der erhaltenen Mischung mit einer Säure wie zum Beispiel Phosphorsäure, Citronensäure oder ähnlichem eingeleitet.

Vorzugsweise erfolgt die Neutralisation insbesondere bei hohen PG-Anteilen bei erhöhter Temperatur, um eine vorzeitige Gelbildung vor Beendigung der Neutralisation zu verhindern, die die Homogenität der erhaltenen Gele beeinträchtigen könnte. Ein geeigneter Temperaturbereich liegt bei 50 - 60 °C.

Weiter können die erfindungsgemäßen Gele aus der Schmelze hergestellt werden, wobei ein Kammerkneter oder Zweiwellen-Knetextruder eingesetzt werden kann. In diesem Fall können die Gele in Form von Fasern, Monofilamenten, Filmen oder Folien erhalten werden.
Beispielsweise kann ein korrotierender, engkämmender und selbstreinigender Zweiwellen-Knetextruder zum Einsatz kommen.

Hierfür wird der Extruder nach der Austrittsdüse zum Beispiel mit einem statischen Mischer und Wärmeaustauscher ausgerüstet. Am Austritt des Mischers kann wahlweise eine Breitschlitzdüse oder eine Faserspinndüse angebracht sein.

Weiter kann hier für den Fall, dass dem Polyglucan zur Lösung eine Lauge wie vorstehend im Zusammenhang mit der Fällung genannt, zugesetzt worden ist, diese Lauge in dem nachgeschalteten Mischer neutralisiert werden.

Wesentlich ist, dass im Extrudat erst nach der Verformung zu einem Film oder Faser die Perkolation der elastisch aktiven Elemente des Gels stattfindet.

Die extrudierten Filme oder Fasern können nach Bedarf in ein Bad mit Fällungsmittel wie Methanol, Ethanol, Aceton oder ähnlichen geführt und anschließend gereckt und getrocknet werden.

Bevorzugt ist die Gelbildung durch Fällung in der Lösung, da bei der Bildung aus der Schmelze thermische Degradation von PG auftreten kann.

Nachfolgend wird die vorliegende Erfindung anhand von Beispielen näher erläutert, wobei für die Beispiele ein erfindungsgemäß bevorzugtes lineares wasserunlösliches Polyglucan eingesetzt worden ist.
Das für die Beispiele konkret eingesetzte Polyglucan hatte ein Zahlenmittel $M_n$ von 65 und ein Gewichtsmittel $M_W$ von 85. Diese Beispiele sollen der Veranschaulichung dienen.

BEISPIELE

1. Löslichkeit von Poly-α-1,4-Glucan in KOH

Wegen der hohen Stabilität der PG-Kristallite und der Neigung von PG zur thermischen Degradation bei erhöhten Temperaturen wird für die Herstellung des Gels die Netzwerkbildung in der Lösung gegenüber einem thermoplastischen Schmelzprozess in Gegenwart eines Weichmachers bevorzugt.

Für die Netzwerkbildung in Lösung wurde die Löslichkeit von PG in KOH untersucht. Die folgende Tabelle gibt die Löslichkeit von verschiedenen Mengen PG in wässriger KOH wieder.

| Lösungsmittel [M]KOH | T [C°] | PG [g] | t [min] |
|---|---|---|---|
| 0,50 | 43 | 12 | 4 |
| | 43 | 15 | unlöslich |
| 0,75 | 43 | 18 | 1 |
| | 43 | 27 | unlöslich |
| 1,00 | 25 | 12 | 1 |
| | 25 | 18 | 1 |
| | 25 | 27 | 5 |

Zur Beurteilung der Löslichkeit wurde ein Tropfen der Lösung unter dem Mikroskop untersucht, wobei sich ungelöste PG-Kristallite gut beobachten ließen.

Mögliche Trübheit bzw. grünliche bis gelbliche Färbungen der Lösung werden auf Verunreinigung des eingesetzten PG zurückgeführt.

2. Netzwerkbildung

Es wurden Stärkelösungen mit einem Gehalt an Stärke (Paselli WA 4 von AVEBE, ca. 78 % Amylopektin) von 5,5 g auf 100 ml 0,5 M wässriger KOH-Lösung mit jeweils äquivalenten Mengen an Glycerin mit PG-Lösungen (5,5 g auf 100 ml 0,5 M wässriger KOH-Lösung) in verschiedenen Verhältnissen bei Raumtemperatur miteinander vermischt und anschließend mit Orthophosphorsäure neutralisiert.

Ab einem Anteil an PG von mehr als 10 % (bezogen auf den Gehalt an Stärke und PG) erfolgte beim Neutralisieren eine spontane Gelbildung, wobei eine Weißfärbung des Materials beobachtet werden könnte.
Die Gelbildung erfolgte umso schneller, je höher der Gehalt an PG war. Zudem erhöhte sich mit dem PG-Gehalt die Festigkeit des Gels.

Bei einem Gehalt von PG von weniger als 10 %, setzte die Gelbildung mit Verzögerung ein und die Festigkeit und Weißfärbung der erhaltenen Gele war geringer.

Die beobachtete Weißfärbung ist auf ein Auskristallisieren von PG zurückzuführen, da die Kristallite einen anderen Brechungsindex aufweisen als die Lösung und die festgestellte Gelbildung belegt, dass offenbar tatsächlich Amylopektin Seitenketten in die PG-Kristallite eingebaut worden sind.

Zur Bestätigung wurde die PG-Lösung bereits vor dem Mischen mit der Stärkelösung neutralisiert. Hierbei fiel PG als weißliche Suspension von Kristalliten aus.

Die Mischungen dieser Suspensionen mit der Stärkelösung blieben auch nach der Neutralisation noch Flüssigkeiten und es konnte keinerlei Gelbildung beobachtet werden.

Die fehlende Gelbildung wird darauf zurückgeführt, dass die PG-Kristallite bereits vor dem Mischen ausgefallen sind und damit nicht mehr zum Einbau von Amylopektin-Seitenketten zur Verfügung standen.

Diese Beobachtung bestätigt, dass es mit Hilfe von PG möglich ist, über kristalline Verknüpfungspunkte eine Stärkelösung zu verknüpfen und ein Gel zu erhalten.

Um zu verhindern, dass die Gelbildung bereits einsetzt bevor die Neutralisation beendet ist, und dadurch die Homogenität der erhaltenen Gele beeinträchtigt wird, kann die Neutralisation bei erhöhter Temperatur, beispielsweise bei 50 bis 60 C°, durchgeführt werden, so konnte auch bei hohen PG-Gehalt erreicht werden, dass die Gelbildung erst nach dem Neutralisieren während dem Abkühlen einsetzt.

Nach dem vorstehend beschriebenen Verfahren wurden Filme hergestellt, die neben der Stärke und dem Netzbildner PG Glycerin als Weichmacher sowie Wasser, das durch eine geeignete Trocknung auf einen gewünschten Gehalt eingestellt werden konnte enthielten

Weiter enthielten die Filme Spuren an Kaliumphosphat infolge der Neutralisation.

3. Versuchsserien I, II und III

Anhand der Versuchsserien I und II wurden Netzwerke mit variablem PG-Gehalt hergestellt. Dabei wurde die Stärke WA4 mit der äquivalenten Menge Glycerin in 0.5M KOH bei Raumtemperatur und PG ohne Glycerin bei 43°C gelöst. Die Konzentration von WA4 und PG betrug jeweils 0,05g/ml. Daraus wurden Mischungen mit verschiedenen PG-Gehalten hergestellt, auf 50 °C erhitzt und mit Ortophosphorsäure neutralisiert. Die Mischungen wurden sodann auf Teflon-Filme ausgegossen und in der Atmosphäre getrocknet. Bei der Versuchsserie III wurde die Stärke WA4 mit der äquivalenten Menge Glycerin in Wasser gelöst

Das gelöste PG wurde jedoch vor dem Mischen mit der Stärkelösung neutralisiert, wobei PG ausfiel. Dadurch konnte sichergestellt werden, dass PG im Gegensatz zu den Versuchsserien I und II kein Netzwerk mit der Stärke bilden konnte. Erst danach wurden die beiden Komponenten gemischt, auf 50°C erhitzt, zu Filmen gegossen und getrocknet. Um vergleichbare Wassergehalte zu erhalten, wurden die Filme anschließend im Exsikkator über einer gesättigten Lithiumchlorid-Lösung mit einer Wasseraktivität von 0,113 während zweier Wochen gelagert. Aus den konditionierten Filmen wurden sodann Proben für die Zugversuche ausgestanzt und im Zugversuch auf ihre mechanischen Eigenschaften untersucht.

Die Ergebnisse sind in Tabelle 1 aufgeführt. In dieser und den anderen Tabellen bedeuten:

PG: PG-Anteil (bezogen auf PG+Stärke),
Gly: Glycerin-Anteil (bezogen auf die gesamte Mischung),
$H_2O$: Wassergehalt (bezogen auf die gesamte Mischung),
E: E-Modul,
$\sigma_m$: maximale Festigkeit,
$\varepsilon_m$: Dehnung bei maximaler Festigkeit,
$\varepsilon_b$: Bruchdehnung, d: Probendicke,

Die Zugversuche wurden bei 13mm Probenlänge und einer Dehngeschwindigkeit von 70mm/min durchgeführt.

In Fig. 2.1 sind für die Versuchsserien I, II und III die Festigkeiten in Abhängigkeit des PG-Anteils (bezogen auf Stärke plus PG) aufgetragen.

Die Messpunkte von III, wobei kein Netzwerk vorliegt, liegen auf einer ansteigenden Kurve, da mit zunehmenden PG-Anteil der Glyceringehalt reduziert wurde (da nicht bekannt ist, wie viel Glycerin die eingesetzten PG-Kristallite aufnehmen können, wurde der Glyceringehalt so eingestellt, dass er für die verschiedenen Mischungen bezüglich dem Stärke-Anteil konstant ist).

Die Kurven für die Serien I und II sind ab einem PG-Gehalt von etwas mehr als 5% um einen Betrag von etwas mehr als 2 MPa zu höheren Festigkeiten verschoben.

Diese Verfestigung ist dem PG/Stärke-Netzwerk zuzurechnen.

In Fig. 2.2 sind für dieselben Versuchsserien die E-Moduli in Abhängigkeit des PG-Anteils dargestellt. Die Mischungen, welche ein Netzwerk entwickeln konnten, haben oberhalb von etwas mehr als 5 % PG gegenüber den Mischungen ohne Netzwerk deutlich höhere E-Moduli.

Die Situation ist bezüglich des E-Moduls analog wie bei den Festigkeiten.

Die Bruchdehnungen in Funktion des PG-Anteils sind in Fig. 2.3 dargestellt. Sie sind für das Netzwerk etwas höher als ohne Netzwerk, doch ist der Unterschied im Vergleich zur Festigkeit und dem E-Modul weniger deutlich. Möglicherweise ist dies darauf zurückzuführen, dass die konditionierten Filme noch Luftblasen enthielten, wodurch die Genauigkeit der mechanischen Eigenschaften beeinträchtigt wurde.

**Tab.1:**

| Nr. | PG % | Gly % | $H_2O$ % | E MPa | $\sigma_m$ MPa | $\varepsilon_m$ % | $\varepsilon_b$ % |
|---|---|---|---|---|---|---|---|
| I | Stärke und PG in 0.5M KOH gelöst (je 0.05g/ml), gemischt und bei 50°C neutralisiert; Wassergehalt: 5.43 +/- 0.44 | | | | | | |
| I-1 | 6.1 | 45.5 | 4.91 | 56+/-56 | 4.7+/-1.5 | 69+/-56 | 73+/-55 |
| I-2 | 7.6 | 45.1 | 5.26 | 135+/-50 | 7.4+/-0.4 | 64+/-39 | 69 +/- 37 |
| I-3 | 11.4 | 44.0 | 5.62 | 142+/- 26 | 7.8+/-2.4 | 79+/-19 | 84+/-18 |
| I-4 | 15.2 | 43.0 | 5.93 | 154 +/- 21 | 8.3+/-1.3 | 61 +/- 26 | 68 +/- 23 |
| II | Stärke und PG in 0.5M KOH gelöst (je 0.05g/ml), gemischt und bei 50°C neutralisiert; Wassergehalt: 5.29 +/- 0.51 | | | | | | |
| II-2 | 6.1 | 45.3 | 4.99 | 68+/-36 | 6.0+/-2.4 | 72+/-9 | 79+/-9 |
| II-3 | 7.6 | 44.9 | 5.42 | 145+/-59 | 8.1+/-2.0 | 58 +/- 6 | 64+/-7 |
| II-4 | 11.4 | 43.9 | 4.58 | 158+/-14 | 8.6+/-0.4 | 67+/-7 | 74+/-12 |
| II-5 | 15.1 | 42.8 | 5.75 | 191 +/- 53 | 9.3+/-1.5 | 72+/-10 | 77+/-12 |
| II-6 | 22.6 | 40.6 | 4.78 | 277+/-90 | 11.3+/-2.7 | 11+/-2.6 | 43+/-6 |
| II-7 | 30.0 | 38.2 | 5.74 | 270+/-42 | 12.5+/-1.1 | 22+/-4 | 30+/-9 |
| II-8 | 37.3 | 35.6 | 5.79 | 230 +/- 95 | 11.5+/-6.6 | 6.3+/-3.5 | 8.1+/-4.8 |
| III | Stärke in $H_2O$ gelöst, PG in 0.5M KOH (je 0.05g/ml) und durch Neutralisation bei 50°C ausgefällt, dann mit Stärke-Lösung gemischt; Wassergehalt: 5.45 +/- 0.98 | | | | | | |
| III-1 | 0.0 | 46.9 | 4.53 | 23 +/- 9 | 4.1+/-1.2 | 105 +/- 35 | 109+/-36 |
| III-2 | 5.8 | 45.4 | 6.87 | 61 +/- 27 | 5.5+/-1.3 | 52+/-13 | 91+/-14 |
| III-3 | 7.6 | 44.9 | 6.51 | 65 +/- 3 | 5.7+/-0.3 | 55 +/- 9 | 84+/-10 |
| III-4 | 11.4 | 43.9 | 5.02 | 70+/-25 | 6.1+/-1.6 | 71+/-24 | 76+/-25 |
| III-5 | 15.1 | 42.8 | 4.82 | 80 +/- 22 | 7.0+/-1.0 | 87+/-6 | 90+/-7 |
| III-6 | 22.6 | 40.6 | 4.97 | 103+/-46 | 7.5+/-0.3 | 20+/-2 | 54+/-4 |

Jedoch belegt der Vergleich der Versuchserien I und II mit III eindeutig das Vorliegen eines Netzwerkes und dessen Vorteile

4. Versuchsserien IV, V, VI und VII

Analog zu der oben beschriebenen Versuchsführung unter 2. wurde mit den Versuchsserien IV und V Netzwerke mit verschiedenem PG-Anteil hergestellt, während bei den Versuchsserien VI und VII PG vor dem Mischen mit der Stärkelösung durch Neutralisation ausgefällt wurde, sodass kein Netzwerk entstehen konnte.

Bei den Serien V und VII jedoch wurde im Unterschied zu den vorgängigen Versuchen zu den PG-Lösungen ein dem PG-Gehalt äquivalenter Anteil an Glycerin zugegeben, sodass für alle Mischungen dieser Serien der Glycerinanteil konstant bei 50% lag.

In Fig. 3. 1, wo die Festigkeiten von Filmen dieser Mischungen dargestellt sind, ist daher der Anstieg der Festigkeit mit zunehmendem PG-Anteil für die Serien V und VII mit konstantem Glyceringehalt gegenüber den Serien IV und VI deutlich geringer. Beide Möglichkeiten der Probenherstellung aber zeigen, dass durch die Ausbildung eines Netzwerks höhere Festigkeiten erhalten werden können.

Die im Zugversuch gemessenen mechanischen Eigenschaften sind in der Tabelle 2a und 2b aufgeführt. Die Proben dieser Versuchsserien wurden nicht über gesättigter Lithiumchlorid-Lösung konditioniert, sondern wurden in der Atmosphäre getrocknet. Der Wassergehalt variierte deshalb von Probe zu Probe, wie ebenfalls in der Tabelle 2a und 2b protokolliert ist, insbesondere stieg der Wassergehalt mit dem PG-Gehalt etwas an, weil mit zunehmendem PG-Gehalt bei der Herstellung des Netzwerks höher viskose Flüssigkeiten und entsprechend dickere Filme erhalten wurden. Doch sind die Serien VI und IV, sowie V und VII bezüglich des Wassergehalts vergleichbar, die gemessenen Unterschiede sind relativ gering.

**Tab.2a:**

| Nr. | PG % | Gly % | $H_2O$ % | E MPA | $\sigma_m$ MPa | $\varepsilon_m$ % | $\varepsilon_b$ % | d mm |
|---|---|---|---|---|---|---|---|---|
| VI | Stärke und PG in 0.5M KOH gelöst (je 0.05g/ml), PG bei RT separat neutralisiert, anschliessend mit der Stärke-Lösung vermischt und bei 50°C neutralisiert | | | | | | | |
| VI-1 | 0 | 49.5 | 7.84 | 4.0+/-1.5 | 1.71 +/- 0.20 | 210 +/-10 | 221 +/- 13 | 0.33 +/- 0.07 |
| VI-2 | 2.9 | 48.8 | 8.63 | 3.9+/-0.8 | 1.60+/- 0.29 | 202 +/-10 | 218 +/- 22 | 0.31 +/- 0.02 |
| VI-3 | 4.9 | 48.3 | 9.44 | 4.9+/-1.2 | 1.78 +/- 0.21 | 190 +/- 4 | 205 +/- 4 | 0.33 +/- 0.05 |
| VI-4 | 9.8 | 46.9 | 9.47 | 6.9+/-2.7 | 2.00 +/- 0.56 | 184 +/-16 | 192+/-18 | 0.31 +/- 0.06 |
| VI-5 | 19.7 | 44.1 | 9.58 | 17.1+/-6.8 | 2.95 +/- 0.33 | 143 +/-16 | 155+/-16 | 0.30 +/- 0.03 |
| VI-6 | 29.6 | 40.9 | 10.60 | 26 +/- 7 | 4.06 +/- 0.40 | 134 +/- 22 | 137+/-21 | 0.32 +/- 0.03 |
| VI-7 | 39.6 | 37.2 | 10.85 | 43 +/-13 | 4.27 +/- 0.48 | 89 +/-17 | 110 +/- 17 | 0.52 +/- 0.06 |
| IV | Stärke und PG in 0.5M KOH gelöst (je 0.05g/ml), bei RT gemischt, auf 50°C aufgeheizt, gemischt und neutralisiert | | | | | | | |
| IV-2 | 2.9 | 48.8 | 9.72 | 9.1+/-2.4 | 2.11 +/- 0.31 | 199 +/-14 | 209 +/- 14 | 0.35 +/- 0.04 |
| IV-3 | 4.9 | 48.3 | 10.31 | 12.0+/-2.3 | 2.19+/- 0.20 | 169 +/- 6 | 179+/-10 | 0.29 +/- 0.01 |
| IV-4 | 9.8 | 46.9 | 10.34 | 14+/-1.7 | 2.41+/- 0.23 | 134+/-12 | 151+/-13 | 0.22+/-0.04 |
| IV-5 | 19.7 | 44.1 | 9.25 | 27 +/-1.4 | 3.59 +/- 0.26 | 130 +/- 9 | 137 +/- 9 | 0.37 +/- 0.07 |
| IV-6 | 29.6 | 40.9 | 9.64 | 41 +/- 9 | 4.88 +/- 0.35 | 107+/-9 | 111 +/- 8 | 0.36 +/- 0.01 |
| IV-7 | 39.6 | 37.2 | 10.20 | 55+/-6 | 5.05 +/- 0.23 | 76+/-5 | 79+/-5 | 0.46 +/- 0.03 |

**Tab. 2b:**

| Nr. | PG % | Gly % | $H_2O$ % | E MPA | $\sigma_m$ MPa | $\varepsilon_m$ % | $\varepsilon_b$ % | d mm |
|---|---|---|---|---|---|---|---|---|
| V | Stärke und PG in 0.5M KOH gelöst (je 0.05g/ml), bei RT gemischt, auf 50°C aufgeheizt, gemischt und neutralisiert | | | | | | | |

(fortgesetzt)

| Nr. | PG % | Gly % | $H_2O$ % | E MPA | $\sigma_m$ MPa | $\varepsilon_m$ % | $\varepsilon_b$ % | d mm |
|---|---|---|---|---|---|---|---|---|
| V | Stärke und PG in 0.5M KOH gelöst (je 0.05g/ml), bei RT gemischt, auf 50°C aufgeheizt, gemischt und neutralisiert | | | | | | | |
| V-1 | 0 | 50.0 | 7.99 | 5.1+/-2.1 | 1.54+/- 0.10 | 205+/-16 | 232 +/-16 | 0.33 +/- 0.02; |
| V-2 | 3.5 | 50.0 | 8.56 | 6.9+/-1.7 | 1.85 +/- 0.21 | 191+/-16 | 201+/-21 | 0.33 +/- 0.02[1] |
| V-3 | 5.0 | 50.0 | 8.59 | 7.7+/-3.0 | 1.90+/- 0.08 | 180+/-8 | 195+/-9 | 0.26 +/- 0.02. |
| V-4 | 10.0 | 50.0 | 9.37 | 6.1+/-0.7 | 1.74 +/- 0.31 | 158+/-20 | 172 +/- 20 | 0.28 +/- 0.03 |
| V-5 | 15.0 | 50.0 | 9.28 | 6.9+/-2.2 | 1.85 +/- 0.33 | 167+/-13 | 173+/-14 | 0.38 +/- 0.05 |
| V-6 | 20.0 | 50.0 | 9.41 | 7.3+/-1.4 | 2.00 +/- 0.32 | 154 +/- 9 | 158+/-9 | 0.31 +/- 0.03 |
| V-7 | 25.0 | 50.0 | 9.90 | 10.2+/-3.5 | 2.10+/- 0.40 | 126+/-23 | 129+/-23 | 0.37+/-0.11 |
| V-8 | 30.0 | 50.0 | 9.76 | 11.6+/-3.1 | 2.04 +/- 0.23 | 119+/-11 | 123+/-11 | 0.35 +/- 0.04; |
| VII | Stärke und PG in 0.5M KOH gelöst (je 0.05g/ml), PG bei RT separat neutralisiert, anschliessend mit der Stärke- Lösung vermischt und bei 50°C neutralisiert | | | | | | | |
| VII-1 | 0 | 50.0 | 8.81 | 3.3+/-0.5 | 1.32 +/- 0.24 | 229 +/- 9 | 249+/-8 | 0.31 +/- 0.06 |
| VII-2 | 3.5 | 50.0 | 9.06 | 3.8+/-1.4 | 1.37 +/- 0.21 | 221 +/-16 | 233+/-34 | 0.29 +/- 0.02 |
| VII-3 | 5.0 | 50.0 | 9.07 | 3.7 +/-1.4 | 1.41 +/- 0.33 | 231 +/- 4 | 244 +/-11 | 0.27 +/- 0.03 |
| VII-4 | 10.0 | 50.0 | 9.29 | 3.9+/-0.5 | 1.39 +/- 0.08 | 187 +/-17 | 200 +/- 30 | 0.32 +/- 0.01 |
| VII-5 | 15.0 | 50.0 | 9.73 | 3.6+/-1.1 | 1.39 +/- 0.27 | 198+/-6 | 224 +/- 24 | 0.27 +/- 0.02 , |
| VII-6 | 20.0 | 50.0 | 9.00 | 4.6+/-1.0 | 1.46+/- 0.17 | 183+/-5 | 209+/-14 | 0.31 +/- 0.05 |
| VII-7 | 25.0 | 50.0 | 9.29 | 5.3+/-0.8 | 1.53 +/- 0.22 | 170+/-10 | 188 +/- 17 | 0.37 +/- 0.06 |
| VII-8 | 30.0 | 50.0 | 10.14 | 6.9+/-1.7 | 1.68 +/- 0.09 | 156+/-19 | 167+/-25 | 0.28 +/- 0.03 |
| VII-9 | 50.0 | 50.0 | 10.10 | 9.5+/-1.4 | 2.02 +/- 0.12 | 134+/-4 | 144 +/- 6 | 0.45 +/- 0.08 |

In Fig. 3.2 ist die Abhängigkeit des E-Moduls vom PG-Gehalt für diese Serien dargestellt. Für die E-Moduli ergeben sich qualitativ dieselben Zusammenhänge wie für die Festigkeiten.

In Fig. 3.3 sind die gemessenen Bruchdehnungen in Abhängigkeit des PG-Gehalts aufgetragen. Sie sind bei Ausbildung eines Netzwerks deutlich geringer als ohne Netzwerk, wenn die Stärke und das eingesetzte PG ein einfaches, unvernetztes Zweiphasensystem bilden.

5. Einfluß der Konzentration der Lösungen auf das PG/Stärke-Netzwerk

Da zu erwarten war, dass ausgehend von höher konzentrierten Lösungen dichtere Netzwerke mit einer höheren Anzahl von Netzpunkten pro Volumeneinheit erhalten werden können, wurden zusätzlich zu den vorstehend beschriebenen Versuchsserien mit Lösungen mit jeweils 0,05g trockener Stärke bez. trockenem PG, noch Netzwerke ausgehend von höher konzentrierten Lösungen hergestellt, wobei die Konzentration von Stärke und PG jeweils 0,09g/ml und 0,12g/ml betrug (entsprechend den Versuchsserien 8 und 9). Siehe Tabelle 3.
Die hierbei erhaltenen Filme wurden wiederum in der Atmosphäre getrocknet, sodass der Wassergehalt zwar mit dem PG-Gehalt etwas zunahm, wobei aber die drei Versuchsserien vergleichbar sind.

In Fig. 4.1 ist für die drei Konzentrationen die Festigkeit in Abhängigkeit vom PG-Gehalt dargestellt. Dabei kommt deutlich zum Ausdruck, dass höher konzentrierte Lösungen höhere Festigkeiten und damit auch dichtere Netzwerke ergeben.
Denselben Sachverhalt wiederspiegelt auch Fig. 4.2, wo der E-Modul in Abhängigkeit des PG-Gehalts für die drei Konzentrationen dargestellt ist.
Umgekehrt zeigt Fig. 4.3, dass wie erwartet dichtere Netzwerke außerdem geringere Bruchdehnungen aufweisen.

Es wäre zu erwarten gewesen, dass die Kurven in den Fig. 4.1 bis 4.3 für den PG-Gehalt von 0 % sich in einem Punkt treffen. Die Abweichungen werden einerseits auf Variationen im Wassergehalt zurückgeführt. Es ist jedoch denkbar, dass auch reine Stärke-Filme eine Abhängigkeit von der Konzentration der Lösung, aus der sie gewonnen wurden, zeigen können (stärker ausgeprägtes Entanglement bei höher konzentrierten Lösungen).

6. Untersuchungen zum Quellverhalten von PG/Stärke-Netzwerken

Von den Filmen der Serien V, VI, VII, VIII und IX wurden Quellversuche während 24 Stunden in synthetischem Magensaft durchgeführt.

Die daraus erhaltenen Volumenquellverhältnisse sind in Fig. 5 graphisch dargestellt.

Der Effekt des PG/Stärke-Netzwerks kommt hier deutlich zum Ausdruck. Die Filme mit Netzwerk zeigen kleinere Volumenquellverhältnisse als die Filme ohne Netzwerk und die Reduktion des Volumenquellverhältnis wird durch die Dichte des Netzwerks günstig beeinflusst, d.h. je konzentrierter die Lösung war, woraus das Netzwerk hergestellt wurde, umso geringer ist das resultierende Volumenquellverhältnis.

**Tab. 3:**

| Nr. | PG % | Gly % | $H_2O$ % | E MPA | $\sigma_m$ MPa | $\varepsilon_m$ % | $\varepsilon_b$ % | d mm |
|---|---|---|---|---|---|---|---|---|
| VIII | Stärke und PG in 0:75M KOH gelöst (je 0.09g/ml), bei RT gemischt, auf 60°C aufgeheizt, gemischt und neutralisiert | | | | | | | |
| VIII-1 | 0 | 50.0 | 6.57 | 7+/- 2 | 1.80+/- 0.22 | 192+/-7 | 210+/-6 | 0.51 +/- 0.04 |
| VIII-2 | 3.6 | 50.0 | 6.72 | 9+/-3 | 2.11 +/- 0.36 | 171+/-19 | 187+/-40 | 0.51 +/- 0.07 |
| VIII-3 | 5.1 | 50.0 | 6.95 | 12+/-3 3 | 2.32 +/- 0.26 | 170+/-25 | 177+1-29 | 0.55 +/- 0.03 |
| VIII-4 | 10.2 | 50.0 | 7.22 | 14 +/- 2 | 2.41+/- 0.10 | 157 +/- 20 | 161+/-23 | 0.72 +/- 0.03 |
| VIII-5 | 15.3 | 50.0 | 8.12 | 15+/-2 | 2.65 +/- 0.16 | 129 +/-15 | 135+1-17 | 1.04 +/- 0.18 |
| VIII-6 | 20.3 | 50.0 | 7.90 | 18+/-5 5 | 2.97 +/- 0.40 | 95+/-15 | 101+/-16 | 0.88 +/- 0.04 |
| VIII-7 | 25.4 | 50.0 | 8.42 | 21 +/- 3 | 3.09 +/- 0.13 | 97+/-5 | 103+/-3 | 20.88 +/- 0.10 |
| VIII-8 | 30.4 | 50.0 | 8.98 | 24 +/- 5 | 3.24 +/- 0.16 | 87+/-10 | 94 +/- 9 | 1.09 +/- 0.08 |
| VIII-9 | 50.5 | 50.0 | 9.79 | 16+/-2 | 2.21 +/- 0.30 | 40+/-12 | 45 +/-12 | 1.52 +/- 0.36 |

(fortgesetzt)

| | | | | | | | | |
|---|---|---|---|---|---|---|---|---|
| IX | Stärke und PG in 1.0M KOH gelöst (je 0.12g/ml), bei RT gemischt, auf 70°C aufgeheizt, gemischt und neutralisiert | | | | | | | |
| IX-1 | 0 | 50.0 | 6.10 | 7+/-5 5 | 2.20 +/- 0.41 | 182+/-19 | 190 +/-19 | 0.62 +/- 0.07 |
| IX-2 | 3.5 | 50.0 | 6.36 | 11+/-3 | 2.95 +/- 0.46 | 165+/-10 | 171 +/-14 | 0.47 +/- 0.05 |
| IX-3 | 5.0 | 50.0 | 6.27 | 14+/-6 | 3.15+/- 0.04 | 156+/-5 | 162+/-4 | 0.72+/- 0.01 |
| IX-4 | 10.0 | 50.0 | 6.36 | 25+/-5 5 | 3.84+/- 0.41 | 101+/-8 | 109+/-10 | 0.52 +/- 0.08 |
| IX-5 | 15.0 | 50.0 | 6.07 | 34+/-8 | 3.99 +/- 0.36 | 72+/-13 | 82 +/-13 | 0.63 +/- 0.12 |
| IX-6 | 20.0 | 50.0 | 7.19 | 37 +/- 7 | 3.81 +/- 0.12 | 53 +/-18 | 60 +/- 20 | 0.66 +/- 0.16 |
| IX-7 | 25.0 | 50.0 | 8.21 | 35 +/- 4 | 3.65 +/- 0.16 | 51 +/-14 | 54+/-16 | 1.39 +/- 0.15 |
| IX-8 | 30.0 | 50.0 | 9.53 | 40+/-5 5 | 3.49 +/- 0.37 | 22 +/- 3 | 28 +/- 4 | 1.22 +/- 0.08 |

**Patentansprüche**

1. Gel umfassend lineares Poly-α-1,4-Glucan, das keine Verzweigungen aufweist, sowie ein Quellungsmittel und Stärke.

2. Gel nach Anspruch 1, **dadurch gekennzeichnet, dass** das lineare poly-α-1,4 Glucan wasserunlöslich ist.

3. Gel nach Anspruch 1 oder 2, **dadurch gekennzeichnet, dass** das lineare poly-α-1,4 Glucan eine Polydispersität von 1,01 bis 50 aufweist.

4. Gel nach mindestens einem der vorstehenden Ansprüche, **dadurch gekennzeichnet, dass** das Verhältnis des Gewichtanteils an Poly-α-1,4-Glucan zu Stärke im Bereich von 0,01 bis 1 liegt.

5. Gel nach mindestens einem der vorstehenden Ansprüche, **dadurch gekennzeichnet, dass** das Verhältnis des Gewichtanteils von Poly-α-1,4-Glucan und Stärke zu Quellungsmittel im Bereich von 0.01 bis 0,6 liegt.

6. Gel nach mindestens einem der vorstehenden Ansprüche, **dadurch gekennzeichnet, dass** als Quellungsmittel ein Weichmacher ausgewählt unter Wasser, Ethylenglykol, Glycerin, Propandiol, Erythritol, Mannitol, Sorbitol, Maleinsäure, Bernsteinsäure, Adipinsäure, Milchsäure, 2-Hydroxybuttersäure, Citronensäure, Apfelsäure, Dimethylsulfoxid und Harnstoff.

7. Gel nach mindestens einem der vorstehenden Ansprüche, **dadurch gekennzeichnet, dass** das Gel essbar und/ oder biologisch abbaubar ist.

8. Gel nach einem der vorhergehenden Ansprüche, **dadurch gekennzeichnet, dass** das Gel zusätzlich mindestens einen weiteren pharmakologisch, kosmetisch und/oder agrochemisch wirksamen Bestandteil, und/oder geruchs- und/oder geschmacksverändernden Zuschläge enthält.

9. Gel nach einem der vorhergehenden Ansprüche, **dadurch gekennzeichnet, dass** das lineare Poly-α-1,4-Glucan einen Polymerisationsgrad in einem Bereich von 30 bis 300 aufweist.

10. Verfahren zur Herstellung eines Gels nach einem der Ansprüche 1 bis 9, **dadurch gekennzeichnet, dass** eine erste Lösung mit dem gelösten Stärkeanteil mit einer zweiten Lösung mit dem gelösten Poly-α-1,4-Glucananteil vermischt und eine Fällung durchgeführt wird.

**11.** Verfahren nach Anspruch 10, **dadurch gekennzeichnet, dass** der poly-α-1,4-Glucananteil in einer Lauge gelöst und die Fällung durch Neutralisation der Lauge mit Säure erfolgt.

**12.** Verfahren nach Anspruch 11, **dadurch gekennzeichnet, dass** als Lauge Kalilauge mit einer Molarität von 0,01 bis 3,0 eingesetzt wird.

**13.** Verfahren nach Anspruch 11 oder 12 **dadurch gekennzeichnet, dass** die Säure ausgewählt ist unter Phosphorsäure und Citronensäure.

**14.** Verfahren nach einem der Ansprüche 10 bis 13, **dadurch gekennzeichnet, dass** die Mischung der ersten und zweiten Lösung in einem Zweiwellenextruder erfolgt.

**15.** Verfahren nach Anspruch 14, **dadurch gekennzeichnet, dass** die Neutralisation in einem dem Extruder nachgeschalteten Mischer erfolgt.

**16.** Verfahren nach Anspruch 14 oder 15, **dadurch gekennzeichnet, dass** dem Extruder und ggf. dem Mischer eine Breitschlitz- oder Faserspinndüse zur Formgebung nachgeschaltet ist.

**17.** Gel nach einem der Ansprüche 1 bis 9, **dadurch gekennzeichnet, dass** das Gel als Film, Folie, Monofilament oder Faser vorliegt.

**18.** Verwendung eines Gels nach einem der Ansprüche 1 bis 9 oder 17 in der Landwirtschaft, im Gesundheits- und Ernährungswesen und in der Kosmetik

**19.** Verwendung eines Gels nach einem der Ansprüche 1 bis 9 oder 17 zur Herstellung von Kapseln oder retardierenden Freisetzungssystemen.

## Claims

**1.** Gel comprising linear poly-α-1,4-glucan that does not exhibit any branches, as well as a swelling agent and starch.

**2.** Gel according to claim 1, wherein the linear poly-α-1,4-glucan is insoluble in water.

**3.** Gel according to claim 1 or 2, wherein the linear poly-α-1,4-glucan exhibits a polydispersity of 1.01 to 50.

**4.** Gel as claimed in at least one of the preceding claims, wherein the ratio of the weight fraction of poly-α-1,4-glucan to starch ranges from 0.01 to 1.

**5.** Gel as claimed in at least one of the preceding claims, wherein the ratio of the weight fraction of poly-α-1,4-glucan and starch to swelling agent ranges from 0.01 to 0.6.

**6.** Gel as claimed in at least one of the preceding claims, wherein the swelling agent is a plasticizer selected from the group consisting of water, ethylene glycol, glycerol, propanediol, erythritol, mannitol, sorbitol, maleic acid, succinic acid, adipic acid, lactic acid, 2-hydroxybutyric acid, citric acid, malic acid, dimethyl sulfoxide and urea.

**7.** Gel as claimed in at least one of the preceding claims, wherein the gel is edible and/or biodegradable.

**8.** Gel as claimed in one of the preceding claims, wherein the gel additionally comprises at least one further pharmacologically, cosmetically and/or agrochemically active constituent, and/or odor- and/or flavor-modifying additives.

**9.** Gel as claimed in one of the preceding claims, wherein the linear poly-α-1,4-glucan has a degree of polymerization ranging from 30 to 300.

**10.** Process for producing a gel as claimed in one of claims 1 to 9, wherein a first solution containing the dissolved starch portion is mixed with a second solution containing the dissolved poly-α-1,4-glucan portion and a precipitation is carried out.

11. Process according to claim 10, wherein the poly-α-1,4-glucan portion is dissolved in an alkali metal hydroxide solution and the precipitation is carried out by neutralizing the alkali metal hydroxide solution with acid.

12. Process according to claim 11, wherein the alkaline solution used is caustic potash solution having a molarity from 0.01 to 3.0.

13. Process according to claim 11 or 12, wherein the acid is selected from phosphoric acid and citric acid.

14. Process according to claims 10 to 13, wherein the first and second solutions are mixed in a twin-shaft extruder.

15. Process according to claim 14, wherein the neutralization is carried out in a mixer downstream of the extruder.

16. Process according to claim 14 or 15, wherein a broad slot die or fiber spinneret is disposed downstream of the extruder, and if appropriate the mixer, for shaping.

17. Gel according to claims 1 to 9, wherein the gel is a film, sheeting, monofilament or fiber.

18. Use of a gel according to claims 1 to 9 or 17 in agriculture, in health and nutrition, and in cosmetics.

19. Use of a gel according to one of claims 1 to 9 or 17 for producing capsules or controlled-release systems.

## Revendications

1. Gel comportant un poly-α-1,4-glucane linéaire qui ne présente pas des ramifications, ainsi qu'un agent gonflant et de l'amidon.

2. Gel selon la revendication 1, **caractérisé en ce que** le poly-α-1,4-glucane linéaire est insoluble dans l'eau.

3. Gel selon la revendication 1 ou 2, **caractérisé en ce que** le poly-α-1,4-glucane linéaire présente une polydispersité de 1,01 à 50.

4. Gel selon au moins l'une quelconque des revendications précédentes, **caractérisé en ce que** le rapport de la fraction pondérale du poly-α-1,4-glucane à l'amidon se trouve dans une plage de 0,01 à 1.

5. Gel selon au moins l'une quelconque des revendications précédentes, **caractérisé en ce que** le rapport de la fraction pondérale du poly-α-1,4-glucane et de l'amidon à l'agent gonflant se trouve dans une plage de 0,01 à 0,6.

6. Gel selon au moins l'une quelconque des revendications précédentes, **caractérisé en ce qu'**a été choisi, comme agent gonflant, un plastifiant parmi l'eau, l'éthylène glycol, le glycérol, le propanediol, l'érythritol, le mannitol, le sorbitol, l'acide maléique, l'acide succinique, l'acide adipique, l'acide lactique, l'acide 2-hydroxybutyrique, l'acide citrique, l'acide malique, le diméthylsulfoxyde et l'urée.

7. Gel selon au moins l'une quelconque des revendications précédentes, **caractérisé en ce que** le gel est comestible et/ou biodégradable.

8. Gel selon l'une quelconque des revendications précédentes, **caractérisé en ce que** ce gel contient en outre au moins un autre constituant pharmacologiquement, cosmétiquement et/ou agrochimiquement efficace et/ou des additifs modificateurs d'odeur et/ou de goût.

9. Gel selon l'une quelconque des revendications précédentes, **caractérisé en ce que** le poly-α-1,4-glucane linéaire présente un degré de polymérisation se situant dans une plage de 30 à 300.

10. Procédé pour la préparation d'un gel selon l'une quelconque des revendications 1 à 9, **caractérisé en ce qu'**une première solution comportant la fraction amidon dissoute est mélangée avec une deuxième solution contenant la fraction poly-α-1,4-glucane dissoute et **en ce que** l'on effectue une précipitation.

11. Procédé selon la revendication 10, **caractérisé en ce que** la fraction poly-α-1,4-glucane est dissoute dans une lessive alcaline et que la précipitation a lieu par neutralisation de la lessive alcaline avec un acide.

**12.** Procédé selon la revendication 11, **caractérisé en ce que** l'on utilise comme lessive alcaline une lessive de potasse d'une molarité de 0,01 à 3,0.

**13.** Procédé selon la revendication 11 ou 12, **caractérisé en ce que** l'acide est choisi parmi l'acide phosphorique et l'acide citrique.

**14.** Procédé selon l'une quelconque des revendications 10 à 13 **caractérisé en ce que** le mélange de la première et de la deuxième solution a lieu dans une extrudeuse à deux vis.

**15.** Procédé selon la revendication 14, **caractérisé en ce que** la neutralisation a lieu dans un mélangeur disposé en aval de l'extrudeuse.

**16.** Procédé selon la revendication 14 ou 15, **caractérisé en ce qu'**une filière plate ou de filage de fibres est disposée en aval de l'extrudeuse et, le cas échéant du mélangeur, pour le formage.

**17.** Gel selon l'une quelconque des revendications 1 à 9, **caractérisé en ce que** le gel se présente sous forme de film, de feuille, de monofilament ou de fibre.

**18.** Utilisation d'un gel selon l'une quelconque des revendications 1 à 9 ou 17, dans l'agriculture, dans le domaine de la santé et de l'alimentation ainsi qu'en cosmétique.

**19.** Utilisation d'un gel selon l'une quelconque des revendications 1 à 9 ou 17, pour la fabrication de capsules ou de systèmes à libération retardée.

**Fig. 1:**

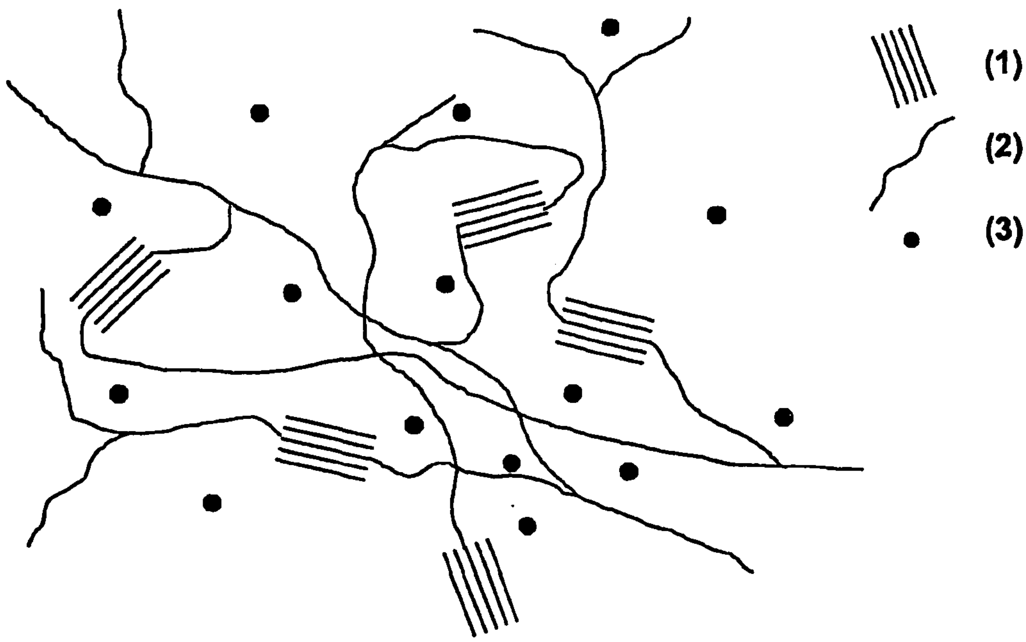

Fig. 2.1:

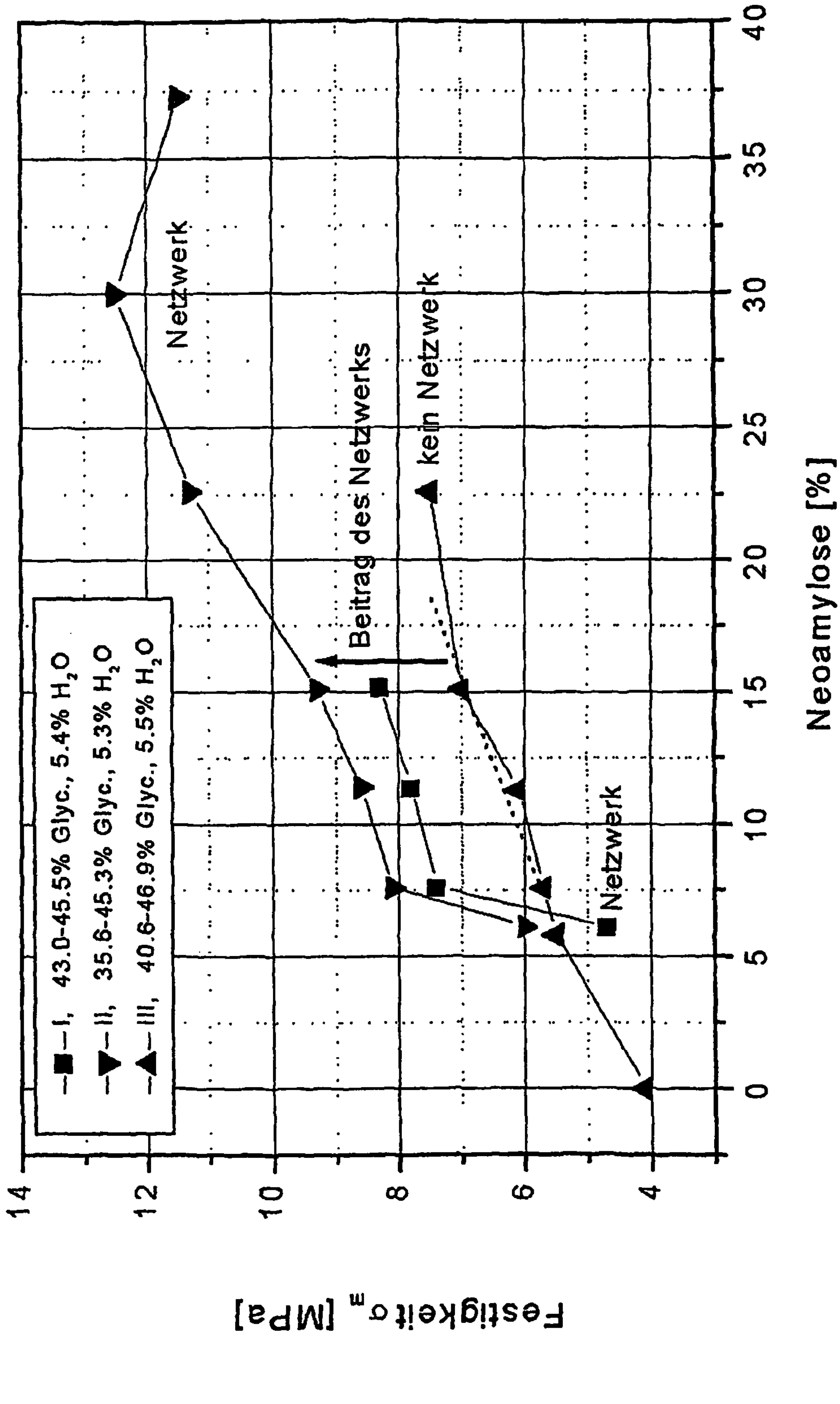
—■—I, 43.0-45.5% Glyc., 5.4% $H_2O$
—▼—II, 35.6-45.3% Glyc., 5.3% $H_2O$
—▲—III, 40.6-46.9% Glyc., 5.5% $H_2O$
Netzwerk
Beitrag des Netzwerks
kein Netzwerk
Netzwerk
Festigkeit $\sigma_m$ [MPa]
Neoamylose [%]
14
12
10
8
6
4
0
5
10
15
20
25
30
35
40

Fig. 2.2:

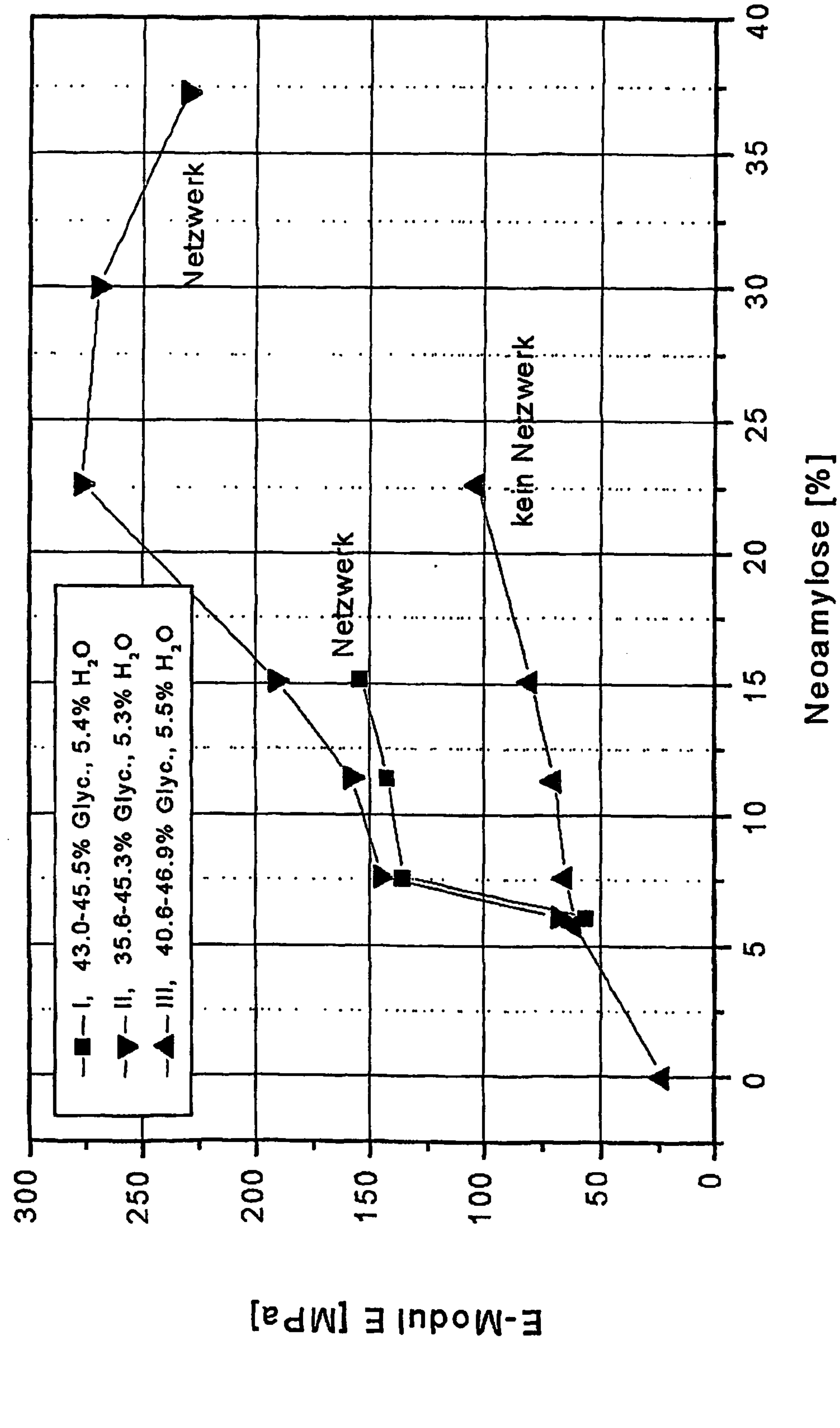

—■— I, 43.0-45.5% Glyc., 5.4% $H_2O$
—▼— II, 35.6-45.3% Glyc., 5.3% $H_2O$
—▲— III, 40.6-46.9% Glyc., 5.5% $H_2O$
Netzwerk
Netzwerk
kein Netzwerk
E-Modul E [MPa]
Neoamylose [%]
0
50
100
150
200
250
300
0
5
10
15
20
25
30
35
40

Fig. 2.3:

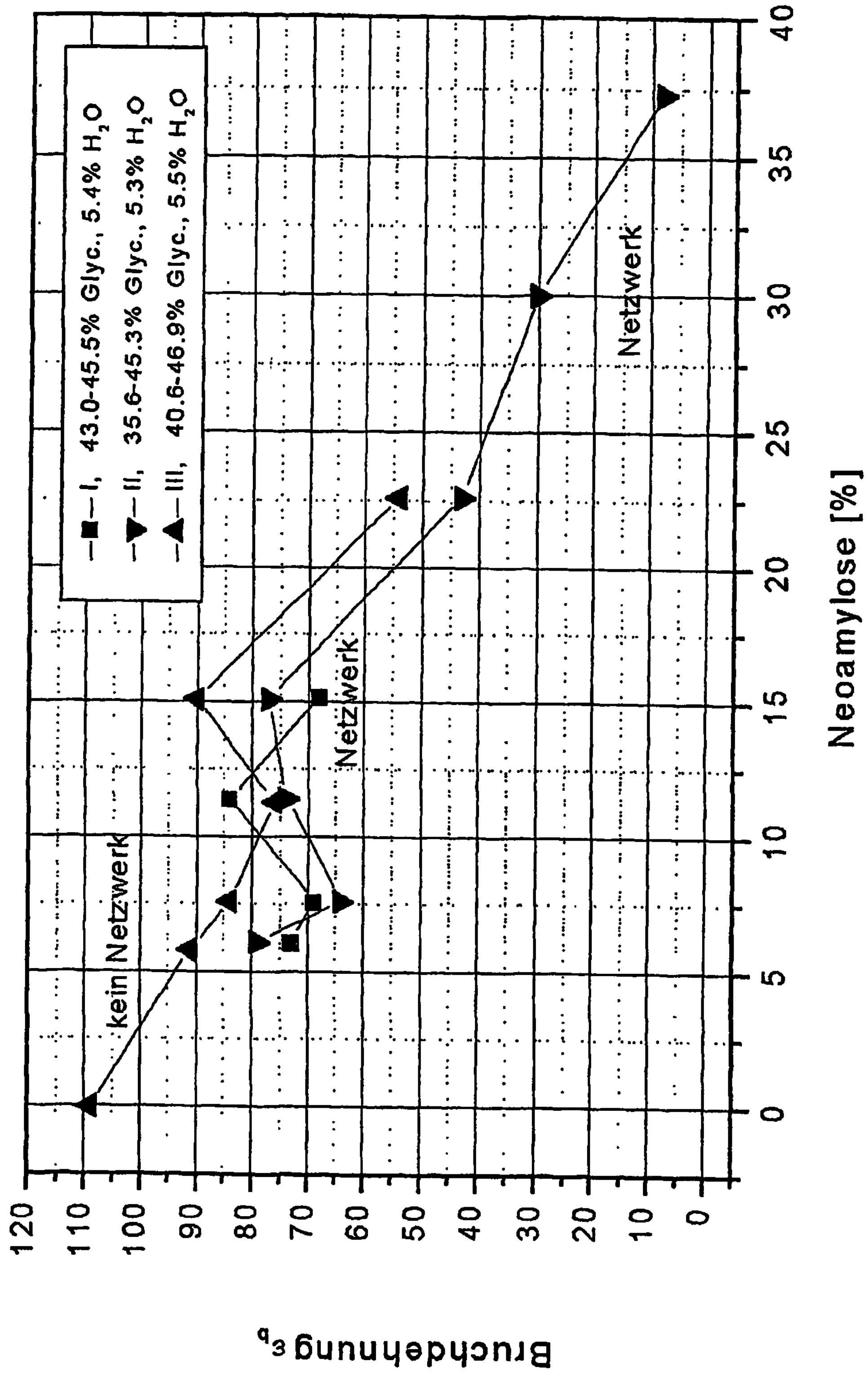
—■— I, 43.0-45.5% Glyc., 5.4% $H_2O$
—▼— II, 35.6-45.3% Glyc., 5.3% $H_2O$
—▲— III, 40.6-46.9% Glyc., 5.5% $H_2O$
kein Netzwerk
Netzwerk
Netzwerk
Neoamylose [%]
Bruchdehnung $\varepsilon_b$
0
5
10
15
20
25
30
35
40
120
110
100
90
80
70
60
50
40
30
20
10
0

Fig. 3.1:

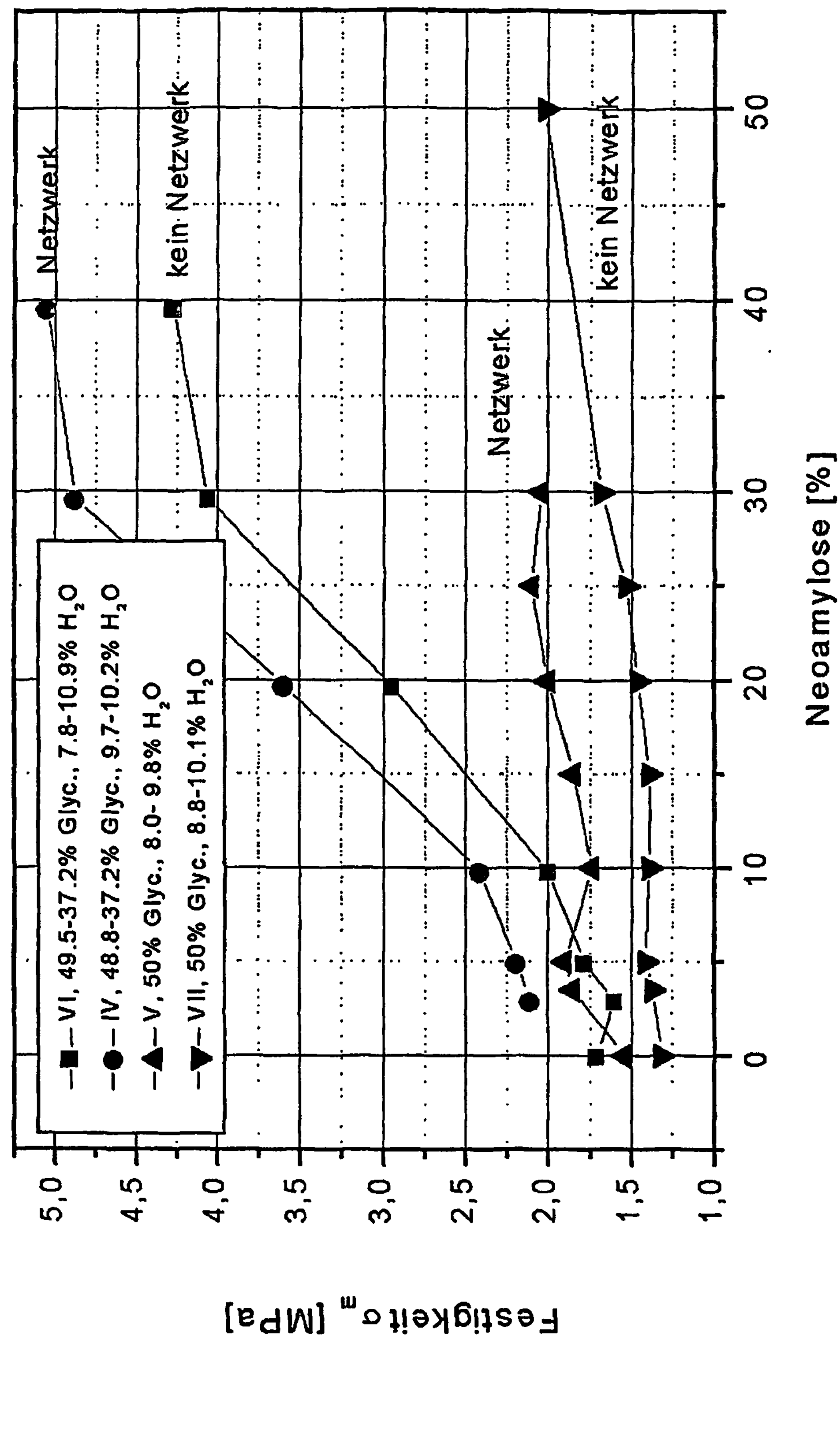
VI, 49.5-37.2% Glyc., 7.8-10.9% $H_2O$
IV, 48.8-37.2% Glyc., 9.7-10.2% $H_2O$
V, 50% Glyc., 8.0- 9.8% $H_2O$
VII, 50% Glyc., 8.8-10.1% $H_2O$
Netzwerk
kein Netzwerk
Netzwerk
kein Netzwerk
Festigkeit $\sigma_m$ [MPa]
5,0
4,5
4,0
3,5
3,0
2,5
2,0
1,5
1,0
0
10
20
30
40
50
Neoamylose [%]

Fig. 3.2:

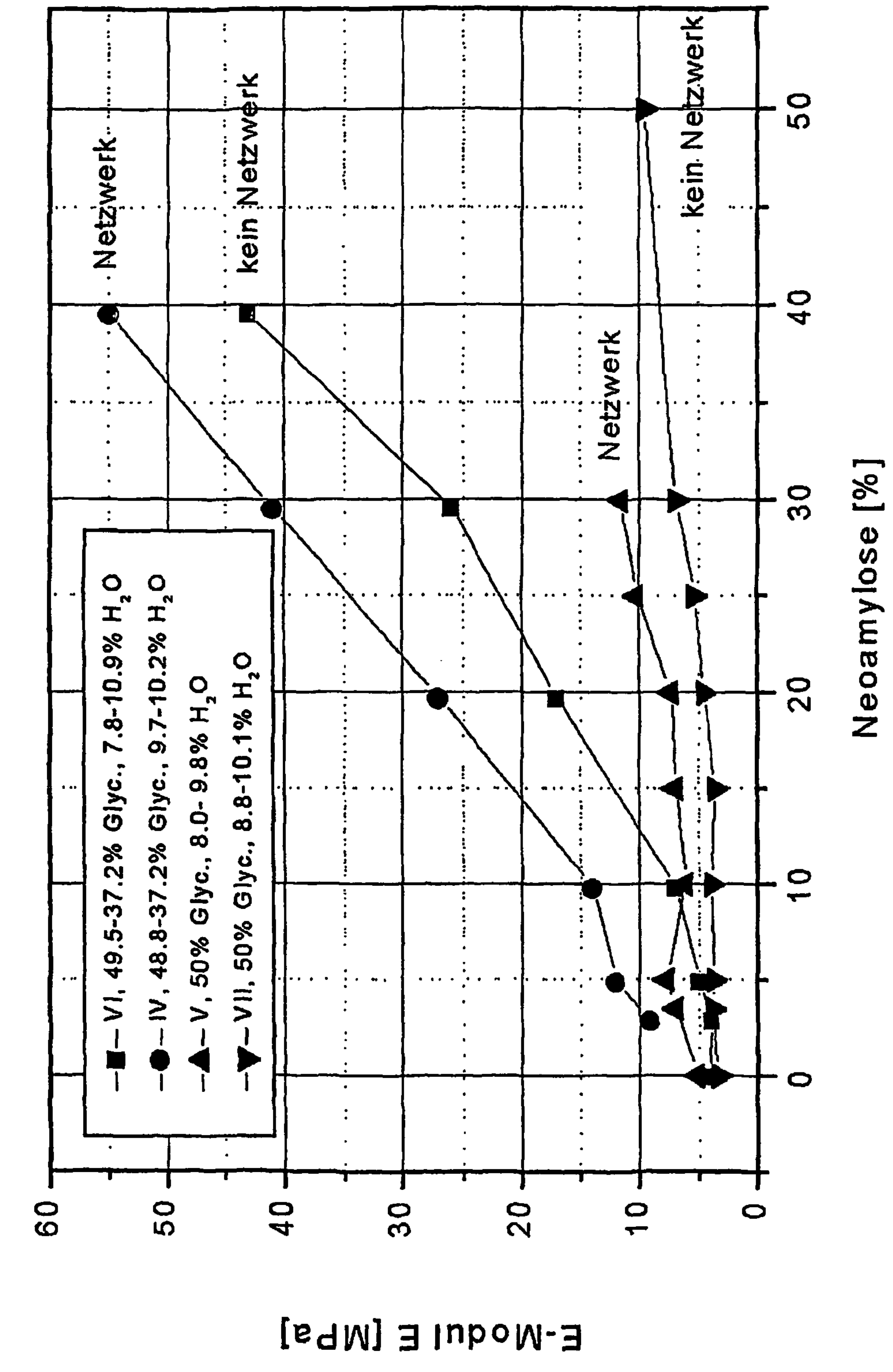
VI, 49.5-37.2% Glyc., 7.8-10.9% H2O
IV, 48.8-37.2% Glyc., 9.7-10.2% H2O
V, 50% Glyc., 8.0- 9.8% H2O
VII, 50% Glyc., 8.8-10.1% H2O
Netzwerk
kein Netzwerk
Netzwerk
kein Netzwerk
E-Modul E [MPa]
Neoamylose [%]
0
10
20
30
40
50
60

Fig.3.3:

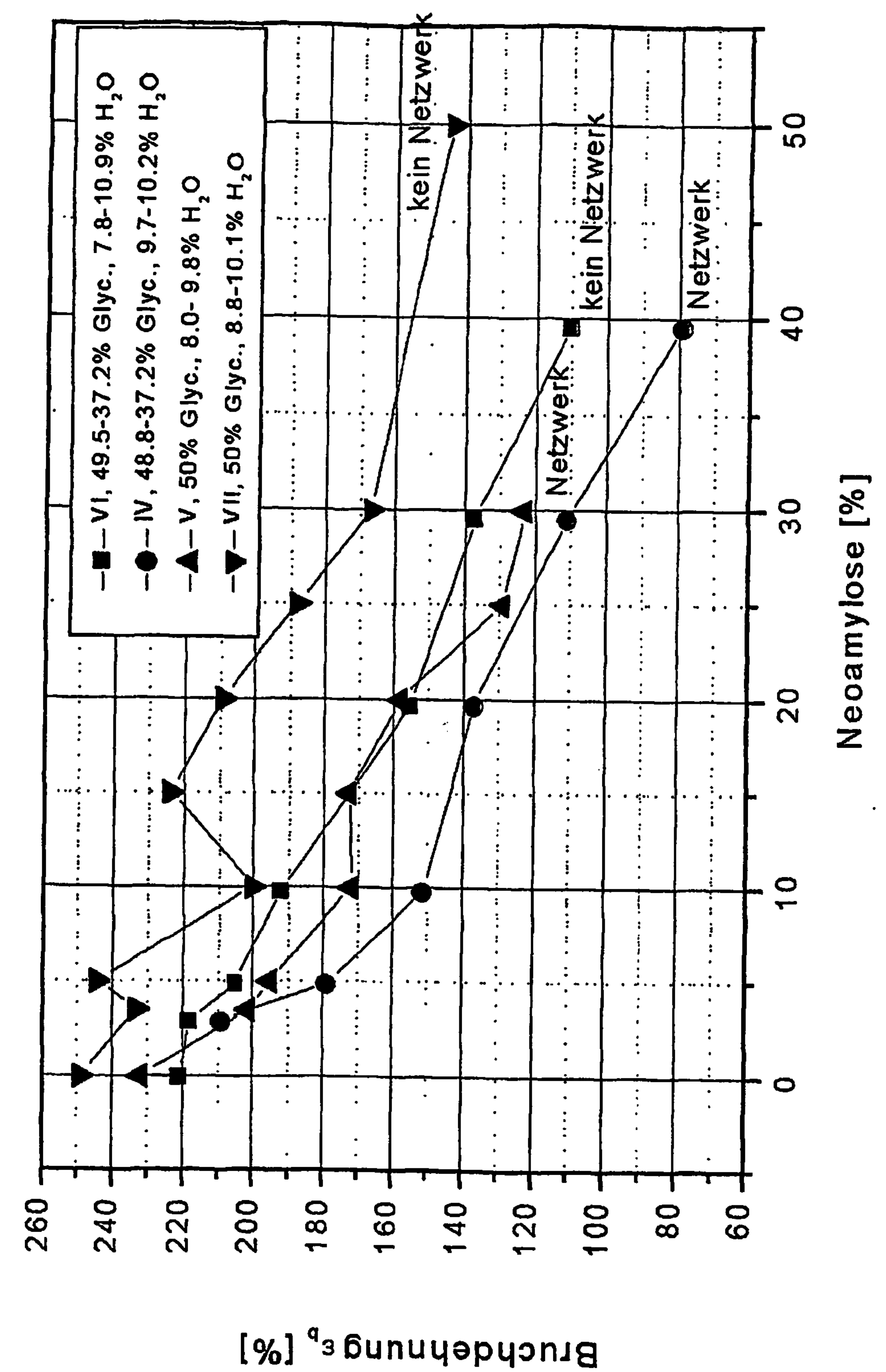
—■— VI, 49.5-37.2% Glyc., 7.8-10.9% H2O
—●— IV, 48.8-37.2% Glyc., 9.7-10.2% H2O
—▲— V, 50% Glyc., 8.0- 9.8% H2O
—▼— VII, 50% Glyc., 8.8-10.1% H2O
kein Netzwerk
kein Netzwerk
Netzwerk
Netzwerk
Bruchdehnung εb [%]
Neoamylose [%]
260
240
220
200
180
160
140
120
100
80
60
0
10
20
30
40
50

Fig. 4.1:

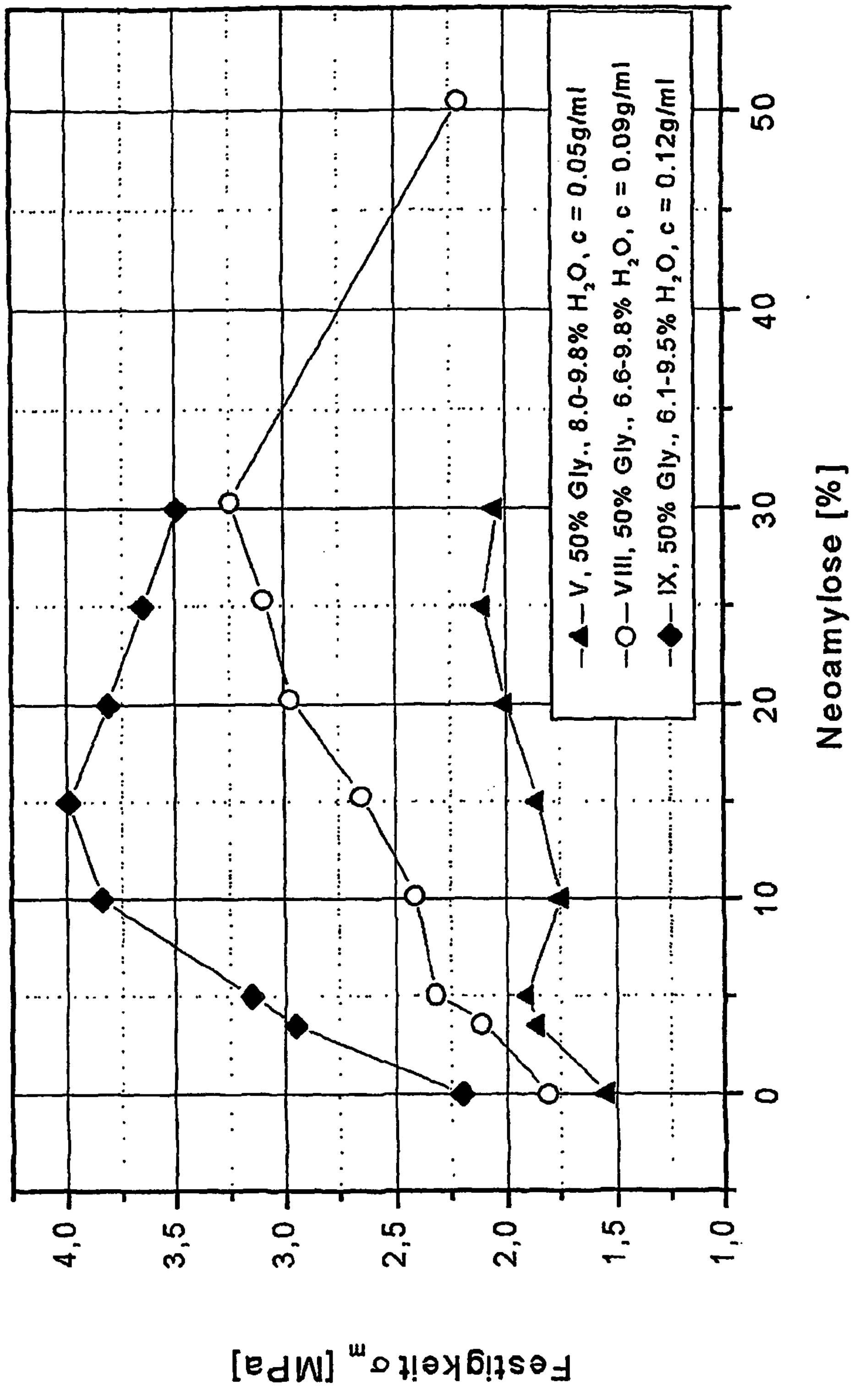
—▲— V, 50% Gly., 8.0-9.8% $H_2O$, c = 0.05g/ml
—○— VIII, 50% Gly., 6.6-9.8% $H_2O$, c = 0.09g/ml
—◆— IX, 50% Gly., 6.1-9.5% $H_2O$, c = 0.12g/ml
Neoamylose [%]
Festigkeit $\sigma_m$ [MPa]
0
10
20
30
40
50
1,0
1,5
2,0
2,5
3,0
3,5
4,0

Fig. 4.2:

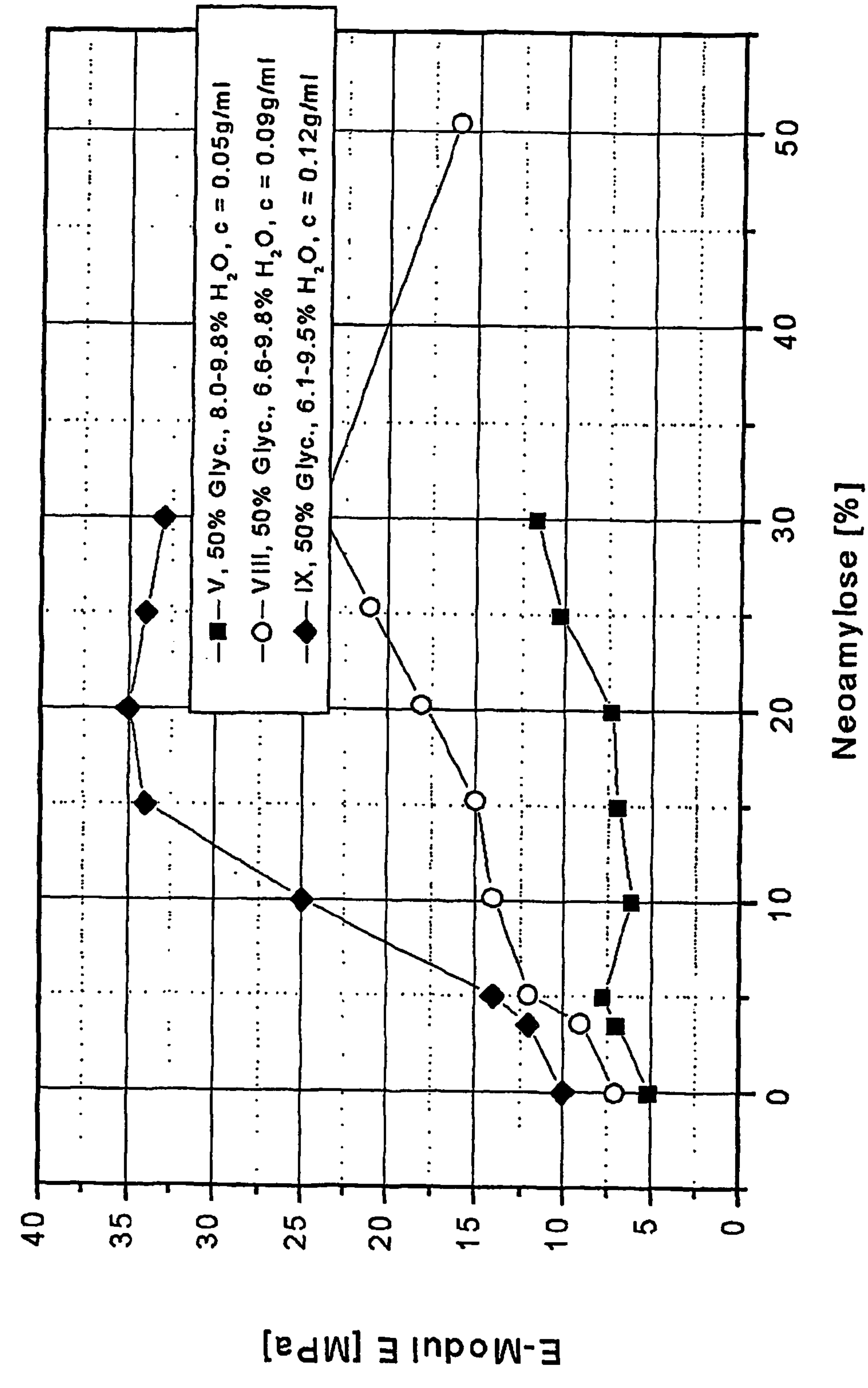
—■— V, 50% Glyc., 8.0-9.8% $H_2O$, c = 0.05g/ml
—○— VIII, 50% Glyc., 6.6-9.8% $H_2O$, c = 0.09g/ml
—◆— IX, 50% Glyc., 6.1-9.5% $H_2O$, c = 0.12g/ml
E-Modul E [MPa]
Neoamylose [%]
0
5
10
15
20
25
30
35
40
0
10
20
30
40
50

Fig. 4.3:

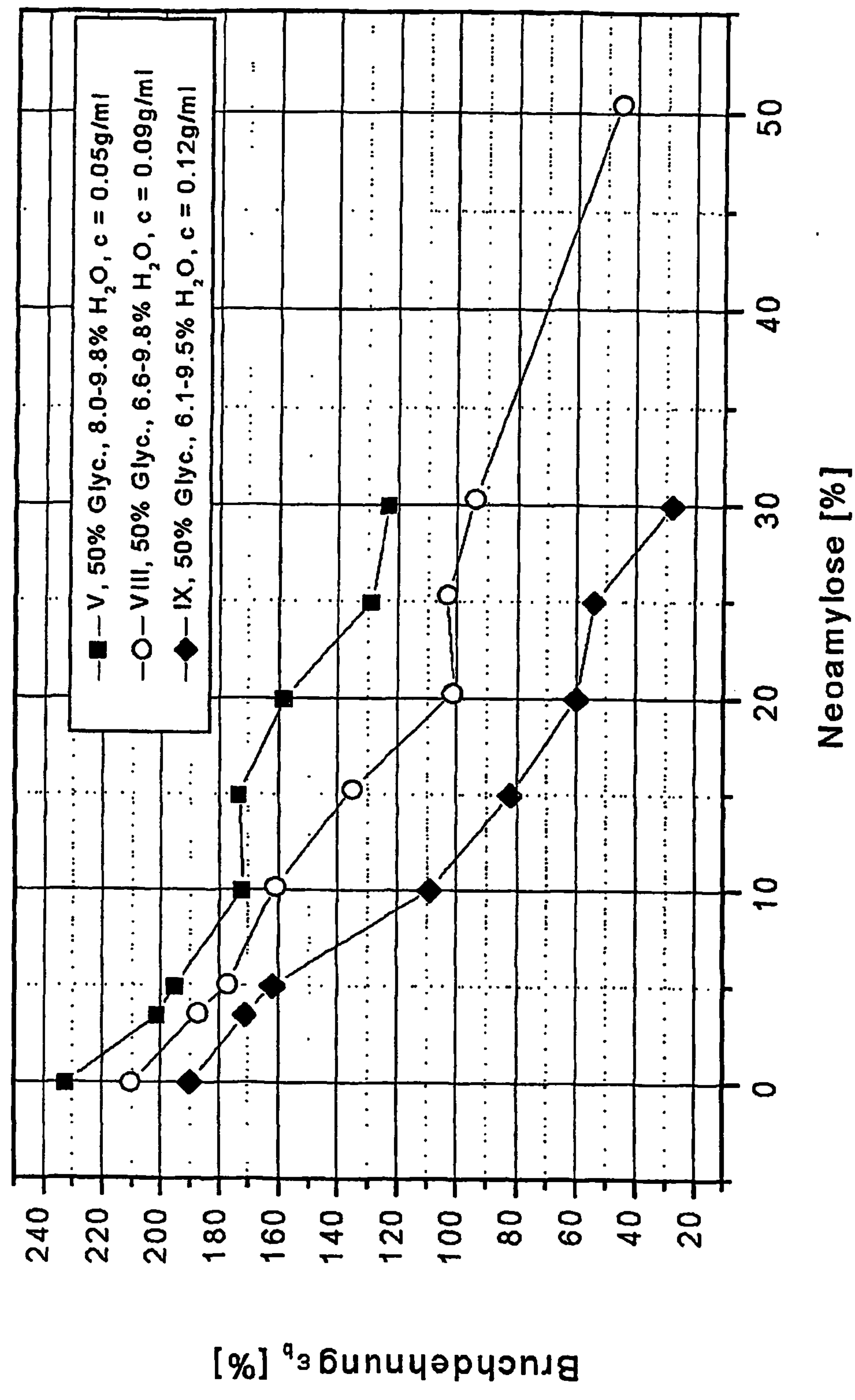
—■— V, 50% Glyc., 8.0-9.8% H2O, c = 0.05g/ml
—○— VIII, 50% Glyc., 6.6-9.8% H2O, c = 0.09g/ml
—◆— IX, 50% Glyc., 6.1-9.5% H2O, c = 0.12g/ml
Bruchdehnung εb [%]
240
220
200
180
160
140
120
100
80
60
40
20
Neoamylose [%]
0
10
20
30
40
50

Fig. 5:

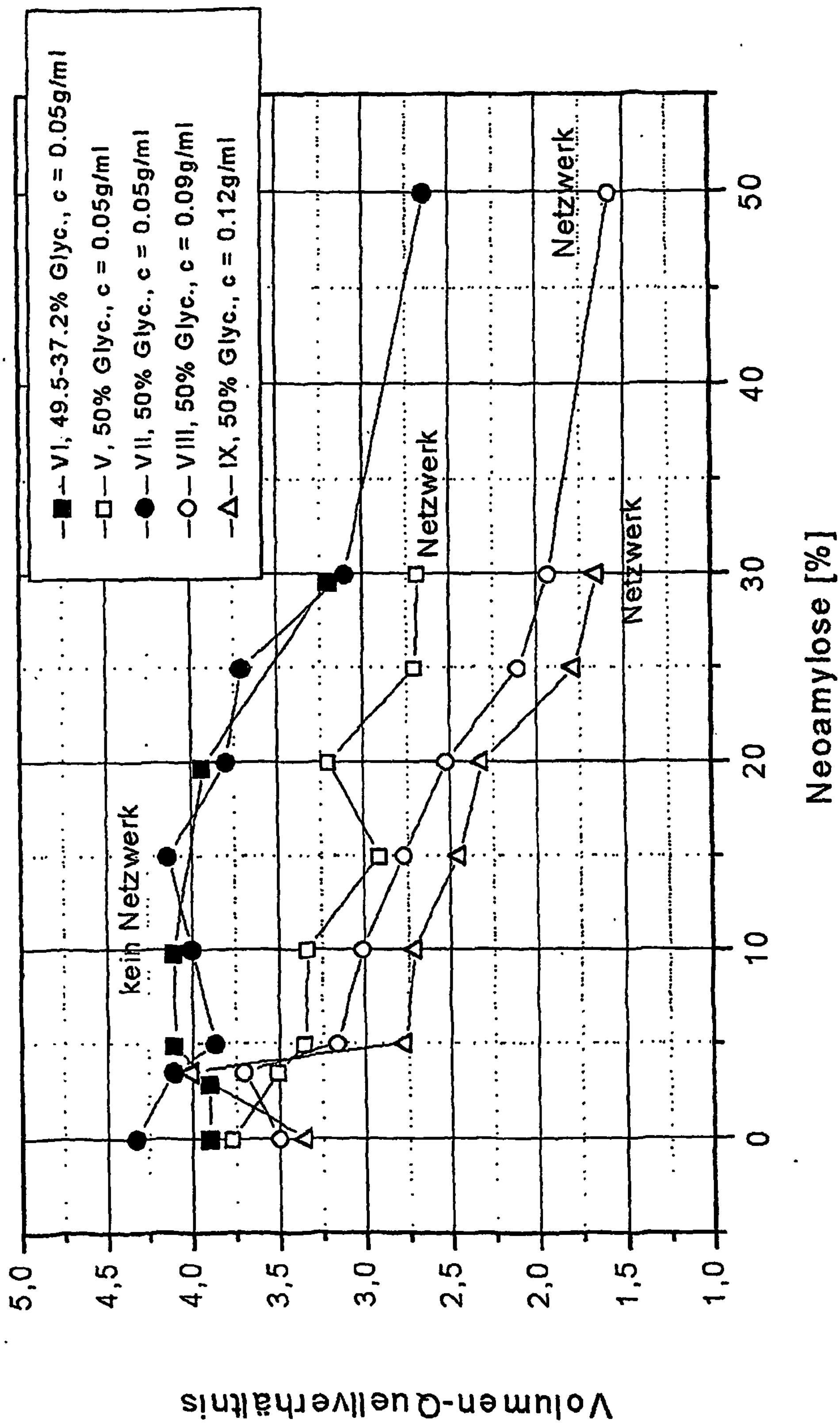

—■—VI, 49.5-37.2% Glyc., c = 0.05g/ml
—□—V, 50% Glyc., c = 0.05g/ml
—●—VII, 50% Glyc., c = 0.05g/ml
—○—VIII, 50% Glyc., c = 0.09g/ml
—△—IX, 50% Glyc., c = 0.12g/ml
kein Netzwerk
Netzwerk
Netzwerk
Netzwerk
5,0
4,5
4,0
3,5
3,0
2,5
2,0
1,5
1,0
0
10
20
30
40
50
Neoamylose [%]
Volumen-Quellverhältnis

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 030986038 B
- WO 9209274 A
- US 5342626 A
- EP 397819 A
- EP 542155 A
- WO 9902660 A
- WO 9902595 A
- WO 9902040 A
- WO 9531553 A


### In der Beschreibung aufgeführte Nicht-Patentliteratur


- **Flory ; Barrett.** *Disc. Farad. Soc.,* 1974, vol. 57, 1
- **Hizukuri, S.** *Carbohydrate Research,* 1981, vol. 94, 205-213
- **Praznik, W.** *Starch/Stärke,* 1994, vol. 46 (3), 88-94
- **Cheng-Yi, L.** *Proc. Natl. Sci. Counc. Vool.,* 1987, vol. 11 (4), 341-345
- Stuttgart. Govi-Verlag, 1987